# EUROPEAN PATENT APPLICATION

(11) **EP 4 575 224 A1**
(43) Date of publication of application: **25.06.2025**
(21) Application number: 23854905.9
(22) Date of filing: 16.08.2023
(51) Int. Cl.: F03G 7/00, F01B 21/02, F01B 21/04, F01B 23/00, H01G 5/013

(54) **INDUSTRIAL MACHINE UTILIZING ELECTRICAL BREAKDOWN OF LIQUID DIELECTRIC BODY**

(30) Priority: 16.08.2022 JP 2022129755
(71) Applicant: M Hikari & Energy Laboratory Co., Ltd., Kamakura-shi Kanagawa 248-0002 (JP)
(72) Inventor: MURAHARA, Masataka, Kamakura-shi, Kanagawa 248-0002 (JP)
(74) Representative: Meissner Bolte Partnerschaft mbB
(86) International application number: PCT/JP2023/029586
(87) International publication number: WO 2024/038871

(57) **Abstract**

Liquefied natural gas has brought about energy hegemonism and environmental destruction. This liquefied natural gas is, however, a liquid dielectric which can be liquefied easily by applying pressure at room temperature, expands in volume by more than 250 times when vaporized, and has a relatively high dielectric constant and a relatively low withstand voltage. As a capacitor, this liquid dielectric is regarded; the energy of the liquid dielectric capacitor is consumed inside the capacitor for use in engines, welding, or producing buoyancy gas, or consumed outside the capacitor for use as an on-board capacitor for a vehicle.

The liquid dielectric capacitor is considered to be a dielectric breakdown-inducing igniter as an alternative to the conventional spark plug. In order to utilize the principle of this igniter as an energy source for an engine, a welding device or a gas production device for a buoyancy bag used to lift off seabed resources, an electric charge is applied to a liquid dielectric thin layer, then the thickness of the liquid dielectric thin layer is brought close to zero to cause dielectric breakdown, or the thickness of the liquid dielectric thin layer is increased to create a high voltage source for an on-board capacitor for a vehicle. Thus, a world without environmental destruction is achieved.

## Description

### CROSS REFERENCE TO RELATED APPLICATIONS

This application is a Continuation Application of PCT Application No. PCT/JP2023/029586, filed August 16, 2023 and based upon and claiming the benefit of priority from prior Japanese Patent Application No. 2022-129755, filed August 16, 2022, the entire contents of all of which are incorporated herein by reference.

### BACKGROUND OF THE INVENTION

### 1. Field of the Invention

The present invention uses pulse heat caused by breakdown in a liquid dielectric, composing a capacitor, for surface welding, engines, or buoyancy bags for mining seabed resources, or relates to a variable high voltage power supply with high dielectric strength that is used as an on-board high voltage capacitor for automobiles by increasing dielectric strength.

### 2. Description of the Related Art

To increase the capacitance (C) of a capacitor, the surface area (S) and dielectric constant (ε) of the electrodes are increased, and the thickness (d) of the dielectric is reduced (C=εS/d). In this way, the maximum capacitance can be obtained by bringing the dielectric layer (d) closer to zero. However, if the thickness (d) of the dielectric is further reduced or a strong electric field is applied, it results in dielectric breakdown, and the energy stored in the dielectric is lost on that spot.

If the dielectric is liquid, the liquid dielectric under pressure forms a hopping conduction or a dielectric breakdown precursor region under charge, and the current rapidly increases in a high electric field, leading to breakdown in the liquid dielectric. This instantaneous discharge causes a temperature rise of 70°C on average and up to 1,000°C in 0.1µs in a 5×10⁻¹¹cc area, inducing a peripheral effect and lowering the breakdown voltage.

On the other hand, if the thickness (d) of the dielectric is further increased, the capacitance decreases, but the withstand voltage increases, and the electrostatic energy (W=CV²/2) stored in the capacitor increases in proportion to the square of the voltage (V).

As shown in Patent Literatures 1 and 2, electric double-layer capacitors with extremely large capacitance have come into the spotlight, and the reason for this is that the dielectric layer is as thin as a single molecular layer (approximately 10Å), allowing for a large capacitance. However, the withstand voltage of electric double-layer capacitors is low at 0.7V, and the only way to increase the voltage is to connect them in series. If a pure water capacitor is formed with an insulator layer made of pure water, the dielectric strength of pure water is 70V/µ, so the withstand voltage will be 700V when the thickness of the pure water layer is 10µ.

If the electrolyte in the electric double layer is considered to be water and the dielectric strength to be 0.7V, the electrostatic energy (W) is W=εS 0.7²/20 =1.96S.

On the other hand, in the pure water capacitor with a withstand voltage of 700V, the thickness (d) of the dielectric is as thick as 10µ (10,000 Å), and the capacitance is low at 1/1000 of that of the electric double-layer capacitor. However, the electrostatic energy (W) is W=εS 700²/20000=1960S, so the electrostatic energy of the pure water capacitor is 1,000 times that of the electric double-layer capacitor per unit.

Today's on-board power supplies for automobiles generally consist of 100 lithium-ion batteries connected in series, doubled in voltage, and then converted to 600V three-phase AC by an inverter to drive a three-phase motor.

In the present invention, a pure water capacitor with electrostatic energy 1,000 times that of an electric double-layer capacitor is realized. Furthermore, if the pure water is replaced with glycerin (dielectric constant ε=47) with a dielectric strength of 170V/µ, the thickness (d) of the dielectric at a withstand voltage of 700V is 4.12µ (4,120Å), so the electrostatic energy (W) of the glycerin capacitor is W=εS 700²/2d= 2795S, which is 1,426 times that of an electric double-layer capacitor. We believe that high-voltage capacitors that make use of both withstand voltage and capacitance, without being limited to electric double-layer capacitors, will lead to industrial development.

### CITATION LIST

### Patent Literature

Patent Literature 1: PCT/JP2014/073687
Patent Literature 2: PCT/JP2017/015029
Patent Literature 3: Japanese Patent No. 3527969
Patent Literature 4: Japanese Patent No. 5651871

### Non-Patent Literature

Non-patent Literature 1: DIELECTRIC STRENGTH OF INSULATING MATERIALS
L. I. Berger - Carbon, 2006 - thevespiary.org
Non-patent Literature 2: Dielectric Phenomenology, p. 332, The Institute of Electrical Engineers of Japan (1991)

### BRIEF SUMMARY OF THE INVENTION

### Technical Problem

The object of the present invention is to form a variable capacitance capacitor using a thin layer of liquid dielectric that transitions from a liquid phase to a gas phase, and to utilize the electrostatic energy stored in the capacitor. Two notable features are that the liquid dielectric thin layer that constitutes this capacitor is made extremely thin or a strong electric field is applied to cause dielectric breakdown, allowing the pulse heat generated to be instantly consumed inside the capacitor, and that the liquid dielectric thin layer is made thicker to increase the withstand voltage, allowing the high electrostatic energy stored to be consumed over a long period of time outside the capacitor.

What makes this invention different from conventional methods is that the thickness of the liquid dielectric thin layer that constitutes the capacitor is increased/decreased to control the dielectric strength and the withstand voltage associated with dielectric breakdown of the liquid dielectric thin layer, and it is used in surface welding, engines, buoyancy bags, or on-board high voltage capacitors for automobiles. In particular, liquid dielectrics have a higher dielectric constant than gaseous dielectrics, and the capacitance can be changed. Then, the thickness of the liquid dielectric thin layer is made close to zero to induce dielectric breakdown, and the stored charge is converted into thermal energy within the liquid dielectric thin layer for use in surface welding; alternatively, the thickness of the liquid dielectric thin layer is increased and charged under a high withstand voltage, and then the thickness of the liquid dielectric thin layer is reduced to induce dielectric breakdown, and the stored charge is converted into thermal energy within the liquid dielectric thin layer, and the volume expansion of the vaporized gas generated is utilized for a volume expansion engine including a rotary engine, a reciprocating engine, or a jet engine that does not involve combustion, or for a buoyancy bag for mining deep-sea resources; alternatively, the thickness of the liquid dielectric thin layer that constitutes the capacitor is increased to increase electrostatic energy under a high withstand voltage, and the stored charge is utilized for an electric power storage device outside the system of the liquid dielectric thin layer.

For making a high-voltage variable capacitance capacitor, a liquid dielectric that has a high dielectric strength and can freely change its dielectric thickness (d) is essential.

Liquid dielectrics with high dielectric strength are glycerin (170 V/µ), benzene (163 V/µ), nitrobenzene (130 V/µ), pure water (70 V/µ), and insulating oil (60-100 V/µ). Materials with high dielectric constants are pure water (ε=88), formic acid (ε=58.5), glycerin (ε=47), nitrobenzene (ε=34.8), methyl alcohol (ε=32.6), ethyl alcohol (ε=24.3), acetone (ε=20.7), ammonia (ε=15-25), butane (ε=20), carbon dioxide (ε=1.6), benzene (ε=2.3), xylene (ε=2.3), carbon disulfide (ε=2.64), toluene (ε=2.39), carbon tetrachloride (ε=2.2), and silicone oil (ε=2.2). On the other hand, liquids with high dielectric constants are pure water (ε=88, 70 V/µ), formic acid (ε=58.5), glycerin (ε=47, 170 V/µ), nitrobenzene (ε=34.8, 130 V/µ), methyl alcohol (ε=32.6, 80 V/µ), ethyl alcohol (ε=23, 80 V/µ), acetone (ε=20.7, 64 V/µ), ammonia (ε=15-25), butane (ε=20), carbon disulfide (ε=2.64, 140 V/µ), toluene (ε=2.39, 130 V/µ), benzene (ε=2.3, 163 V/µ), xylene (ε=2.3, 150 V/µ), silicone oil (ε=2.2, 8 V/µ), insulating oil (ε=2.2, 60-100 V/µ), and carbon dioxide (ε=1.6). Among these, materials with high dielectric strength and high dielectric constant are pure water (70 V/µ, ε=88), glycerin (ε=47, 170 V/µ), and nitrobenzene (ε=34.8, 130 V/µ).

To cause a dielectric breakdown in a capacitor after applying an electric charge and use it as a heat source for surface welding, it does not matter if the withstand voltage is low as long as the capacitance is large. In particular, when causing dielectric breakdown, the thickness of the liquid dielectric thin layer is minimized, so the capacitance naturally increases and the withstand voltage drops dramatically. On the other hand, when using it as a heat source for a volume expansion engine, a large amount of vaporized gas is required, so it is necessary to thicken the liquefied gas layer as a liquid dielectric and apply a high voltage, or to propagate localized dielectric breakdown due to electronic breakdown and cause dielectric breakdown to occur at a low voltage in a short time.

The problem that the invention aims to solve is to induce dielectric breakdown in a thin layer of liquid dielectric sandwiched between a pair of solid surfaces, consume the electric charge stored in the liquid dielectric as pulse heat, and weld the pair of solid surfaces (base materials) together with the pulse heat, or to expand the liquid dielectric into gas with the pulse heat and use it as the primary drive for an engine. And, or to provide a capacitor for a high-voltage DC power supply by increasing the thickness of the liquid dielectric thin layer to increase the withstand voltage.

### Solution to Problem

A capacitor comprises a sealed electrode chamber, wherein a fluid dielectric composed of a liquid dielectric containing a liquefied gas or pure water and/or a gaseous dielectric made of said liquid dielectric, vaporized, is sandwiched in the gap between a pair of positive and negative electrodes made up of metal and/or solid dielectrics, having flat or curved surfaces, and the fluid dielectric is surrounded by an insulating partition wall including a wall of atmospheric air due to meniscus force; the capacitor is a variable capacitance capacitor, wherein a pressure-giving/pressure-receiving device for controlling the fluid dielectric in the sealed electrode chamber, equipped with at least one of the following functions, is installed:
liquid thickness adjustment function, function for opening/closing an insulating partition wall, pressurizing function, pressure-exerting/drive-transmission function, dielectric breakdown-inducing function, function for critical temperature control, coolant cooling function, thermoelectric element cooling function, function for supporting a moving wall, and charging control function.

The pressure-giving/pressure-receiving device of the variable capacitance capacitor has the liquid thickness adjustment function, wherewith a dielectric breakdown is induced by decreasing the thickness of the liquid dielectric and/or by applying a strong electric field to the liquid dielectric, or a high dielectric strength capacitor is made by increasing the thickness of the liquid dielectric.

When inducing said dielectric breakdown, the variable capacitance capacitor is charged with the charging control function, and then, a breakdown is caused in the liquid dielectric by shortening the distance between said positive and negative electrodes and/or by applying a voltage higher than its dielectric strength to the gap between said positive and negative electrodes, whereby pulse heat is generated.

It is proposed that this pulse heat is utilized in welding device, device for instantaneously jetting expanded gas, engine device, buoyancy device for mining seabed resources, and steam engine device, and the spark gap conventionally used as a gas ignition device in internal combustion engines is replaced with a gas jet dielectric breakdown-inducing igniter in order to make a driving energy source of the pulse heat.

The gas jet dielectric breakdown-inducing igniter is a device that produces a gaseous dielectric by causing breakdown in the liquid dielectric and with the pulse heat generated, vaporizing and expanding the liquid dielectric in the sealed electrode chamber.

The welding device is a device that joins a pair of metal and/or solid dielectrics sandwiching the liquid dielectric with the pulse heat generated by breakdown of the liquid dielectric, and can join a metal to a base metal and base metals together without being limited to conventional metal welding.

The device for instantaneously jetting expanded gas is applied to rockets and blasting devices; a gas that liquefies under pressure at room temperature, made of heteronuclear diatomic molecules with a critical temperature of 273K or higher, is enclosed in the gas jet dielectric breakdown-inducing igniter, and the insulating partition wall is sealed with the function for opening/closing the insulating partition wall, and then, a jet gas produced by applying a voltage higher than the dielectric strength and inducing a breakdown in the liquid dielectric is converted to thrust or explosive power.

The engine device, comprising a reciprocating engine, a rotary engine with a circular rotor, or a rotary engine with a triangular rotor, that repeats the operation of converting the expanded gas of the gas that liquefies under pressure at room temperature, jetted from the gas jet dielectric breakdown-inducing igniter, into a drive power with the pressure-exerting/drive-transmission function, and the operation of reliquefying the gaseous dielectric with the pressurizing function, using a part of the drive power.

The buoyancy device for mining seabed resources is equipped with function for adjusting balance between the internal pressure of the buoyancy bag and the hydrostatic pressures, and is a device wherein the liquid dielectric injected into the gas jet dielectric breakdown-inducing igniter is a gas that liquefied under pressure at room temperature or a gas that liquefies under pressure at low temperature, being made of homonuclear diatomic molecules with a critical temperature of 273K or lower, its volume expansion accompanying the vaporization of the liquid dielectric, made of the gas that liquefies under pressure at room temperature or the gas that liquefies under pressure at low temperature, is repeated a plurality of times, the gaseous dielectric is injected into the buoyancy bag, and thus, the balance between the internal pressure of the buoyancy bag and the hydrostatic pressures is adjusted during descending to and ascending from the seabed.

In case that the liquid dielectric being used in a device for instantaneously jetting expanded gas or an engine device is pure water,
the steam engine device repeats the operation of causing dielectric breakdown in the pure water and converting the steam, vaporized and expanded by the pulse heat, into drive force with the pressure-exerting/drive-transmission function, and the operation of reliquefying the vaporized and expanded steam with the pressurizing function, using a part of the drive force.

The variable high voltage power supply with high dielectric strength is a device wherein the thickness of the liquid dielectric is increased with the pressure-giving/pressure-receiving device, and then, the variable capacitance capacitor is charged with a high voltage to make a high dielectric strength capacitor.

Here, the pressure-giving/pressure-receiving device is equipped with at least one of the following functions:
the liquid thickness adjustment function, for controlling the layer thickness of the liquid dielectric:
the dielectric breakdown-inducing function, to induce dielectric breakdown by reducing the layer thickness of the liquid dielectric close to zero:
the function for opening/closing the insulating partition wall, to release the gaseous dielectric, being the liquid dielectric vaporized, out of the system through the insulating partition wall:
the pressurizing function, for liquefying the gaseous dielectric:
the coolant cooling function, for liquefy the gas made of homonuclear diatomic molecules with a critical temperature of 273K or lower:
the function for critical temperature control, to suppress reliquefaction of the gaseous dielectric produced by the breakdown, due to the autogenous pressure of the gaseous dielectric:
the charging and discharging control function, which has the functions to charge the capacitor until just before dielectric breakdown, to apply a higher electric field for causing dielectric breakdown, and to cut off the charger power supply at the time of dielectric breakdown:
the thermoelectric element cooling function, to be used as an auxiliary means for decreasing the boiling point of the gas that liquefies under pressure at low temperature, that was Ne gas liquefied under pressure in the atmosphere of the gas that liquefies under pressure at room temperature:
the pressure-exerting/drive-transmission function, for converting the vaporized gas, expanded during the evaporation of the liquid dielectric, into energy: and,
the function for supporting a moving wall, to pressurize the pressure-contacting surfaces between the piston head and the cylinder face of a reciprocating engine or between the rotor and the housing of a rotary engine, which share the pressurizing function and the pressure-exerting/drive-transmission function.

There is at least one capacitor with a liquid dielectric thin layer sandwiched between positive and negative electrodes, and the electrostatic energy stored in the capacitor is consumed inside or outside the liquid dielectric thin layer. When controlling the withstand voltage of the liquid dielectric thin layer for consuming the energy, it is necessary to provide an external pressure pressurizing device 8, and a refrigerant 135 and/or an electronic refrigeration element 136 for cooling the supercritical state, as a transition control function 29 for changing the liquid dielectric thin layer into a gas phase or supercritical state, or from the gas phase into a liquid phase, or for increasing the density of the liquid layer in the supercritical state, because the transition between "liquid phase/gas phase" is caused by "increasing/decreasing gas pressure" and/or "presence/absence of cooling".

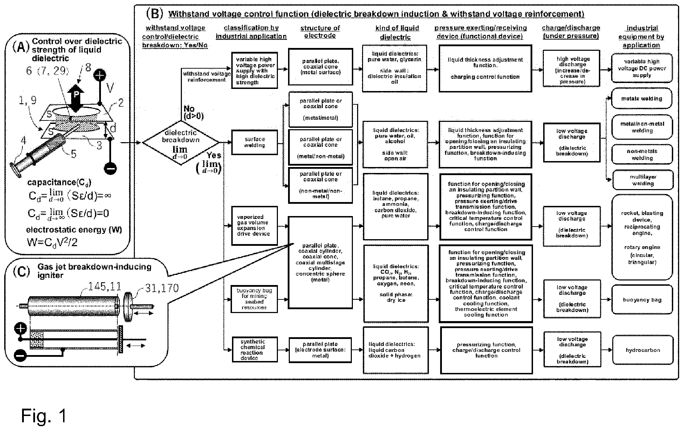

Figure 1 shows a flowchart of the present invention. Figure 1(A) is a schematic diagram showing the formation of a flawless thin liquid capsule (=liquid dielectric thin layer) by the meniscus force and the generation of capacitance and electrostatic energy by changing the thickness (d) of the liquid dielectric thin layer. Figure 1(B) shows a case where the thickness (d) of the liquid dielectric thin layer 7 is shortened with the withstand voltage control function 128 to induce dielectric breakdown in order to maximize the capacitance Cd=lim[d→0]Sε/d=∞ and cause dielectric breakdown when d=0 and a case where the thickness of the liquid dielectric thin layer is widened with the withstand voltage control function to strengthen the withstand voltage. Figure 1(C) is a schematic diagram of a gas jet dielectric breakdown-inducing igniter (a replacement for the spark plug of a conventional engine). The electrode structure is shown below for each classification by industrial application (variable high voltage power supply with high dielectric strength, surface welding, vaporized gas volume expansion drive device, buoyancy bag for mining seabed resources, hydrocarbon composite).

For a variable high voltage power supply with high dielectric strength, metal electrodes are made of parallel plates or coaxial cones: for surface welding, the pair of solid surfaces sandwiching the liquid dielectric are classified by metals together, non-metals together, or metal and base metal: for a vaporized gas volume expansion drive device (rocket, blasting, reciprocating engine, rotary engine) and buoyancy bag for mining seabed resources, the metal electrodes are made of parallel plates, coaxial cylinders, coaxial cones, coaxial multistage cylinders, and concentric spheres: in the case of a synthetic chemical equipment, the metal electrodes are made of parallel plates. Furthermore, the kinds of liquid dielectrics and the functions provided to a pressure-giving/pressure-receiving device in order to control the liquid dielectrics are shown by the classification of industrial application. Such functions are liquid thickness adjustment function, function for opening/closing an insulating partition wall, pressurizing function, pressure-exerting/drive-transmission function, dielectric breakdown-inducing function, function for critical temperature control, coolant cooling function, thermoelectric element cooling function, function for supporting a moving wall, and charging control function. The variable capacitance capacitor is equipped with the pressure-giving/pressure-receiving device that has at least one of the above functions to control the liquid dielectric. And, finally, devices for industrial application equipment are listed.

As shown in FIG. 1(A), a pair of solid surfaces (plane plates) 2, 3 sandwich a liquid dielectric thin layer 7 which comprises the capacitor, and the liquid dielectric thin layer 7 between the pair of solid surfaces forms a flawless thin liquid capsule 6, having a uniformly thick and robust outer wall that does not allow any liquid to leak out of the system, with the meniscus force. The flawless thin liquid capsule 6 is formed by the meniscus force and has the extremely thin and uniformly thick wall not to leak liquid out the system; which is the first element of the present invention.

Figure 1(A) is a schematic diagram of the flawless thin liquid capsule 6 created by meniscus force. A liquid dielectric 5 is inserted between a pair of solid surfaces a, b (base materials) 2, 3 placed in an insulating fluid 1 consisting of air or insulating oil using a liquid pressurizing device 4, and the liquid dielectric 5 and the pair of solid surfaces a, b (base materials) 2, 3 pull each other due to the interfacial tension between the pair of solid surfaces a, b (base materials) 2, 3 and the insulating fluid 1, forming a sturdy outer wall on the outer wall of the liquid dielectric thin layer 7 sandwiched between the pair of solid surfaces a, b (base materials) 2, 3; by which a flawless thin liquid capsule 6 is formed to have an extremely thin, uniformly thick wall that does not allow any liquid to leak out of the system.

The flawless thin liquid capsule 6 that is a liquid dielectric thin layer 7, having ultra-high capacitance; interface control function that controls the interface state between the insulating fluid 1 and the liquid dielectric thin layer 7 by meniscus force; liquid pressurizing device 4 that injects or discharges the liquid dielectric 5 into or from the liquid dielectric thin layer 7; external pressure pressurizing device 8 that pressurizes or depressurizes the liquid dielectric thin layer between the positive and negative electrodes; withstand voltage control function 128 that controls the withstand voltage by expanding and contracting the thickness of the liquid dielectric thin layer 7 by the external pressure pressurizing device 8; provided with the above listed, dielectric breakdown is induced or the withstand voltage is increased by the withstand voltage control function 128, which is the second element of the present invention.

Conventionally, a spacer was inserted between a pair of solid surfaces (plane plates) 2, 3 to increase the withstand voltage. However, an elastic spacer is required to vary the withstand voltage, and its control is complicated. Therefore, in the present invention, followings are provided;
the insulating fluid pressurizing tool 9 to inject/discharge the insulating fluid 1 in contact with the outer wall of the liquid dielectric thin layer 7: the external pressure pressurizing device 8 to control the transition control function 29: cooling means (refrigerant, electronic refrigeration element) 135, 136 provided for cooling the space between the pair of solid surfaces when the transition control function 29 is applied to the supercritical state: a charger 12 to charge the capacitors between the positive and negative electrodes 10, 11 after setting a desired charging voltage with the withstand voltage control function 128: a charge/discharge control function 13 to repeat charging and discharging the liquid dielectric thin layer.

When electrostatic energy is consumed inside the liquid dielectric thin layer 7, after applying an electric charge to the liquid dielectric thin layer 7, the thickness of the liquid dielectric thin layer 7 is made close to zero by the withstand voltage control function 128 and the interfacial tension control function, or a voltage equal to or greater than the withstand voltage is applied to the liquid dielectric thin layer 7 to induce dielectric breakdown, and the extremely short pulse heat generated by the dielectric breakdown can be used as a heat source for surface welding, or as a heat source for a volume expansion engine such as a reciprocating engine and a rotary engine, or a blasting device and a rocket engine, or for vaporizing the liquid dielectric thin layer 7 in a volume expansion device consisting of a buoyancy bag for mining deep-sea resources, or as a heat source for a synthetic chemical reaction between the vaporized gas generated by the extremely short pulse heat and a mixed gas. In particular, for engines that utilize the volume expansion of vaporized gas, the sealed electrode chamber that breaks down the liquid dielectric is relatively large to generate the desired vaporized gas in a short time, and the gas jet dielectric breakdown-inducing igniter 145 that brings a metal plate (piston head 31) close to the positive and negative electrodes of the vaporized gas jet nozzle is most suitable to effectively induce localized dielectric breakdown (Fig. 1(C)).

On the other hand, when electrostatic energy is consumed outside the liquid dielectric thin layer 7, dielectric breakdown is strictly prohibited. The liquid dielectric thin layer 7 is thickened by the withstand voltage control function 128 and the interfacial tension control function and is charged in a state where the dielectric strength is set to a desired withstand voltage or higher, and thus, the electric charge accumulated can be used as a capacitor for a high-voltage DC power supply.

When the liquid dielectric thin layer 7 is used for surface welding, pure water, oils, aromatic compounds, alcohols, etc. can be used. In particular, pure water has a high dielectric constant (ε=88) and high dielectric strength (70V/µ), making it the safest of all chemicals, and is a resource with no regional uneven distribution or depletion concerns. Pure water is versatile for surface welding, but oil can be used for absorbent base materials, hydrocarbons for plastic components, and silicone oil for ceramic components. For surface welding, dielectric breakdown is caused, so the magnitude of dielectric strength is irrelevant, and since the liquid dielectric thin layer 7 is brought as close to 0 as possible, the capacitance becomes high, and the magnitude of the dielectric constant is not very relevant. Furthermore, the interfacial tension between a pair of solid surfaces and the liquid dielectric thin layer 7, and the interfacial tension between the insulator and the liquid dielectric thin layer 7 constitute the meniscus force. The liquid dielectric layer 7 formed by this meniscus force is considered to be a sealed container.

In addition, the insulator is an insulating fluid made of gas, air, insulating oil, alcohols, or aromatic compounds, or a solid insulator made of fluororesin, aromatic resin, mica, or quartz glass. However, it is strictly prohibited to use an insulating fluid and a liquid dielectric made of the same substance. The insulating fluid and solid insulator are necessary to prevent creeping discharge on the outer wall of the liquid dielectric thin layer 7.

This creeping discharge prevention is necessary for high-voltage DC power supplies, and in the case of surface welding, the insulating fluid is air, and a strong liquid dielectric thin layer 7 is naturally formed. On the other hand, in the case of high-voltage DC power supplies, as in Non-Patent Literature 1, a solid insulator or insulating fluid 1 with high dielectric strength is required, but in the case of variable high-voltage DC power supplies, an insulating fluid 1 made of liquid is required. However, carbon tetrachloride (ε=2.2, 160 V/µ), benzene (ε=2.3, 150 V/µ), xylene (ε=2.3, 150 V/µ), carbon disulfide (ε=2.64, 140 V/µ), toluene (ε=2.39, 130 V/µ), nitrobenzene (ε=34.8, 130 V/µ), etc. have high dielectric strength but are toxic, and are not suitable for the insulating fluid 1. For this reason, it is considered best to use non-toxic glycerin (ε=47, 170 V/µ) or insulating oil 126 and select a liquid dielectric 5 with a dielectric strength close to that of the insulating oil 126. Considering these points, it is considered that the combination of pure water dielectric and insulating oil is optimal.

Furthermore, when used for vaporized gas volume expansion drive devices (reciprocating engines, rotary engines, rocket engines, blasting devices) and for buoyancy bag for mining seabed resources, liquefied gas is required, but a gas with a boiling point near room temperature and low liquefaction pressure is preferable. However, for gases that are difficult to vaporize in extremely cold environments, a mixed gas is used.

Pure water vaporizes at 100°C to generate water vapor, which expands in volume by about 1,300 times; however, it condenses when it falls below its boiling point, and the volume expansion pressure is instantly reduced. Therefore, there is no need to dispose of water vapor when the ambient temperature is below 100°C at 1 atmosphere. By utilizing these properties, there is no need for the pressurization process of vaporized gas (water vapor) to generate liquefied gas, and it is possible to cause dielectric breakdown in liquefied gas (pure water) at low pressure.

When used in variable high-voltage DC power supplies, nitrobenzene is attractive because of its high dielectric constant and high dielectric strength, but it is smelly and toxic, so from an industrial perspective, pure water or glycerin are more desirable.

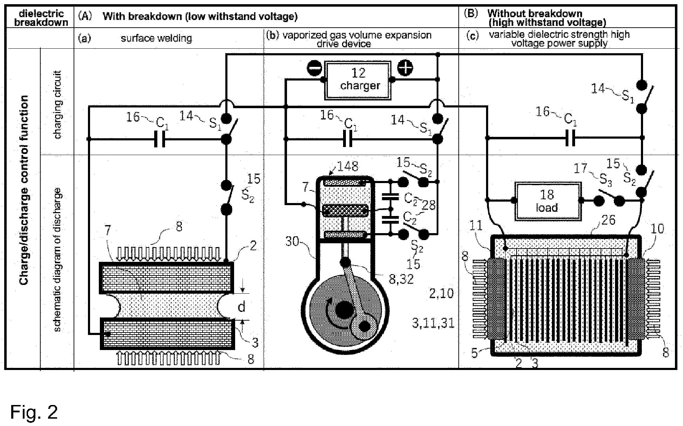

Figure 2 is the schematic diagram of charge/discharge control function devices under pressure in each industrial application field shown in the flowchart of FIG. 1(B). Figure 2(A) shows the case of dielectric breakdown/Yes (low withstand voltage), (B) shows the case of dielectric breakdown/No (high withstand voltage), (a) is surface welding, (b) is a vaporized gas volume expansion drive device (engine), and (c) is a variable high voltage power supply with high dielectric strength.

The role of the charge/discharge control function 13 is to charge at high speed or discharge a large capacity of the liquid dielectric thin layer 7, to prevent over-discharging and promote recharging after discharge.

Figure 2(A) shows the case where the electric field of the liquid dielectric thin layer 7 has a low withstand voltage, inducing dielectric breakdown and adapting to surface welding (a) and volume expansion engine (engine) (b).

Figure 2(B) shows the case where the electric field of the liquid dielectric thin layer 7 has a high withstand voltage, and the thickness of the liquid dielectric thin layer 7 is increased to increase the withstand voltage, and it is used for a variable high voltage power supply with high dielectric strength (c).

In the charging circuit of the charge/discharge control function 13, the charger 12, whose voltage is set according to the application, is connected in parallel with the first capacitor (C₁) 16 of large capacitance via the first switch (S₁) 14, and supplies power to the variable capacitance liquid dielectric capacitor 26, which is made of a liquid dielectric thin layer 7 that constitutes the device for each application.

The application of the charge/discharge control function 13 is divided into cases of dielectric breakdown induction and high voltage DC power supply.

When applied to dielectric breakdown induction, the second switch 15 is provided to connect the variable capacitance liquid dielectric capacitor 26 with the first capacitor (C₁) 16.

In the case of a volume expansion engine that requires high-speed charging with frequent charging and discharging repeated, the first switch (S₁) 14 is turned ON, and while charging the first capacitor (C₁) 16, the liquid dielectric thin layer 7 is rapidly charged with the charge of the first capacitor (C₁) 16 with large capacitance, and the second switch (S₂) 15 is turned OFF just before dielectric breakdown to prevent over-discharge of the first capacitor (C₁) 16 due to the dielectric breakdown.

In the case of surface welding, which requires large-capacity discharge with relatively low frequency of charging and discharging, as shown in FIG. 2(A), the first switch (S₁) 14 is turned ON to charge the first capacitor (C₁) 16, and then while the first switch (S₁) 14 is turned OFF and the second switch (S₂) 15 is turned ON, surface welding is performed, and the charge of the first capacitor (C₁) 16 is used to supplement the thermal energy of the intermolecular force surface welding.

When applied to a high-voltage DC power supply, as shown in FIG. 2(B), the first switch (S₁) 14 is turned ON to charge the first capacitor (C₁) 16 of high-voltage high-capacitance in advance, with the charger 12 set to high voltage, and then the first switch (S₁) 14 and the second switch (S₂) 15 are turned ON and the third switch (S₃) 17 is turned OFF to charge the variable liquid dielectric capacitor (C_{d}) 24 (variable high-voltage capacitor) at ultra-high speed, and then the third switch (S₃) 17 is turned ON to connect to the load 18 for high-speed charging.

The present invention is the development of an electrode that induces instantaneous dielectric breakdown after holding a high charge in an appropriate amount of liquid dielectric, and induces dielectric breakdown by causing a peripheral effect due to the propagation of partial discharge. The positive and negative electrodes are made of metal and/or non-metal, and have any one of the following shapes; parallel plate electrodes: a coaxial cylindrical electrode: a coaxial circular surface electrode, comprising a coaxial multistage cylinder wherein a coaxial cone or a cone of the coaxial cone is replaced with a multistage cylinder: and, a coaxial concave/convex conical electrode, having a concave and convex surfaces of a concentric spherical electrode or a conical electrode as a pair.

To increase the dielectric breakdown energy, it is necessary to increase the capacitance (C=S ε/d) of the capacitors sandwiching the liquid dielectric thin layer 6 and to reduce the dielectric strength of the liquid dielectric 5 and the thin layer. For this reason, the contact area (S) between the liquid dielectric thin layer 7 and the electrode surfaces (solid surfaces) 2, 3 is made extremely large, and the thickness (d) of the liquid dielectric thin layer 7 is made extremely small, thereby increasing the dielectric constant (ε). The feature of this invention is to increase the dielectric constant by liquefying the gas. Furthermore, the shapes of the opposing surfaces of the electrode surfaces (solid surfaces) are made one-, two-, or three-dimensional.

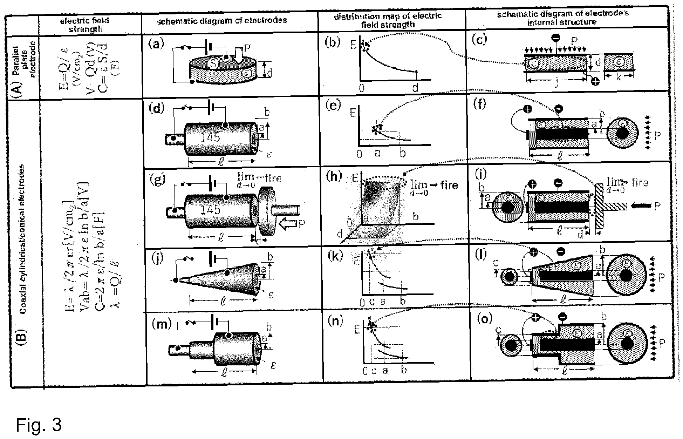

Schematic diagrams of parallel plate electrodes and coaxial cylindrical/conical electrodes are shown in FIG. 3(A)(a) and FIG. 3(B)(d,g,j,m), respectively.
1) In the case of one-dimensional parallel plate electrodes (a), when a charge Q[C] is applied, the electric field strength is E=Q/ε [V/m], the potential difference between the electrodes is V=Qd/ε S [V], and the capacitance is C=εS/d [F].
2) In the case of two-dimensional coaxial cylindrical electrodes (d), when the radius of the inner cylinder is a and the radius of the outer cylinder is b, and a charge λ [C/m] is applied, the electric field strength is E=λ/2π ε r [V/m], Vab=λ/2π ε In b/a [V], and the capacitance is C=2π ε/In b/a [F].
3) In the case of three-dimensional concentric spheres, with an inner sphere of radius a and an outer sphere of radius b, and when a charge Q[C] is given, the electric field strength is E=Q/4π ε r² [V/m], Vab=Q(1/a - 1/b)/4π ε [V], and the capacitance is C=4π ε (ab/(b-a)) [F].

It is noteworthy here that the electric field strength is 1/r² for the sphere in 3) and 1/r for the cylindrical surface in 2), and when (r) becomes small, the electric field strength becomes extremely large, causing a dielectric breakdown, and this localized dielectric breakdown is expected to trigger the vaporization of the entire liquid dielectric thin layer.

Regarding the electric field strength distribution for each electrode structure, as shown in FIG. 3, the electric field strength of the parallel plate electrodes as in (A) is maximum at d=0 as in the electrode schematic diagram (a), the electric field strength distribution (b), and the electrode internal structure diagram (c).

In the coaxial cylindrical/conical electrodes of FIG. 3(B), the electric field strength distribution map (e) of the coaxial cylindrical electrode (d) is maximum at the core electrode surface a. Of the coaxial conical electrode (j), the electric field strength is maximum at the narrowest part of the conical surface and at the core electrode surface a. Of the coaxial multistage electrode (m), the electric field strength is maximum at the cylindrical surface with the smallest diameter and at the core electrode surface a.

Among these electrode structures, the coaxial cylindrical electrode (d) has the greatest amount of liquid dielectric. Therefore, in the present invention, the gas jet dielectric breakdown-inducing igniter 145 as in FIG. 1(C) is proposed. When the metal surface (piston 31) is brought close to the vaporized gas jet surface of the electrode, as shown in of FIG. 3(B) (g,i), the metal surface (piston head 31) comes close to the end surface of the coaxial cylindrical electrode (lim[d→0]Sε/d=∞), the electric field becomes maximum as in the electric field strength distribution map (h), partial discharge occurs, and the breakdown voltage of the liquid dielectric in the electrode drops due to the peripheral effect, leading to dielectric breakdown, vaporization, and ejection of a large amount of gas.

A gas jet dielectric breakdown-inducing igniter is proposed as an alternative to the spark gap used as a gas ignition device in conventional internal combustion engines. As shown in FIG. 1(C), FIG. 3(B)(d,g), FIG. 6(b), FIG. 8(D), FIG. 11(A,B), this gas jet dielectric breakdown-inducing igniter consists of a coaxial cylindrical electrode, and produces gas by inducing breakdown in the liquid dielectric in the sealed electrode chamber and vaporizing and expanding the liquid dielectric with the pulse heat generated by the dielectric breakdown.

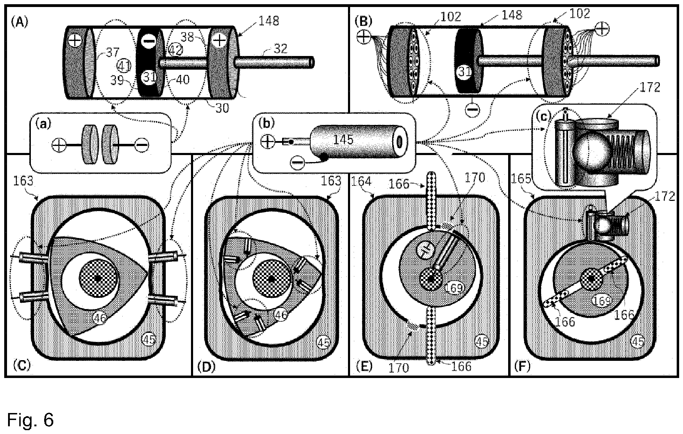

The igniter has the electrodes which are made of metal, and is so constructed that the insulating partition wall is covered with a solid material, and a gas jet dielectric breakdown-inducing igniter 145 with the inlet for the liquid dielectric and the jet nozzle for a vaporized gas that are one and the same or a coaxial cylindrical electrode 172 with the inlet for the liquid dielectric and the jet nozzle for the vaporized gas that are separate, and the electrode construction is such that the amount of the liquid dielectric enough to create a desired pressure in state of an expanded gas is filled in the gas jet dielectric breakdown-inducing igniter, and dielectric breakdown is caused instantaneously.
1) In case that the inlet for the liquid dielectric and the jet nozzle for the vaporized gas are one and the same, the igniter is one of the following gas jet dielectric breakdown-inducing igniters:
   a gas jet dielectric breakdown-inducing igniter that causes partial discharge by bringing the conductive metal surface 170 for inducing dielectric breakdown of a piston head or rotor to the jet nozzle of the gas jet dielectric breakdown-inducing igniter as shown in FIG. 3(B)(g) and FIG. 6(C,D,E,F):
   a gas jet dielectric breakdown-inducing igniter that creates a strong electric field, having electrodes so constructed that the distance between the electrodes is decreased in a part of the electrodes of the gas jet dielectric breakdown-inducing igniter as shown in FIG. 3(B)(j,m); and
   the igniter is equipped with one of the following electrodes:
      the parallel plate electrodes, to which a cylinder face or a piston head comes close at the jet nozzle for the vaporized gas of the expanded gas, and just before the cylinder face or the piston head comes into contact with them, dielectric breakdown is caused:
      the coaxial cylindrical electrode, composed of a cylindrical electrode equipped with the jet nozzle for the expanded gas and a cylindrical rod as the center axis:
      the coaxial conical electrode, composed of a conical electrode with the jet nozzle for the expanded gas being wide and a cylindrical rod as the center axis:
      the coaxial concave/convex conical electrode, composed of conical electrodes with the jet nozzle for the expanded gas being wide and a conical convex surface as the center axis:
      the coaxial multistage cylindrical electrode, composed of a multistage cylinder with the jet nozzle for the expanded gas being wide and a cylindrical rod as the center axis; and
      as shown in FIG. 6(C,D,E), the gas jet dielectric breakdown-inducing igniter 145 is provided as a coaxial cylindrical electrode that has an inlet for the liquid dielectric on the housing side where the space, enclosed by the contact surface of the rotor with the housing and the vane 166 of the rotary engine with a circular rotor, comes close to zero, and conductive metal surfaces 170 for inducing dielectric breakdown are provided, which bring the rotor and the vane 166 close to the positive and negative electrodes placed at the inlet for the liquid dielectric to cause partial discharge after charging the liquid dielectric.
2) In case that the jet nozzle for the vaporized gas and the inlet for the liquid dielectric are separate,
   as shown in FIG. 6(F), the coaxial cylindrical electrode with an inlet and a jet nozzle being separate 172 is adopted in which after the liquefied gas is directly injected through the inlet for the liquid dielectric and sealed by the cock, and the jet nozzle is covered with a pressurizing valve having a reaction force lower than the critical pressure of the liquefied gas, the liquid dielectric is charged, and then, breakdown is caused in the liquid dielectric by applying a voltage higher than the dielectric strength of the liquid dielectric. This coaxial cylindrical electrode with an inlet and a jet nozzle being separate 172 is an electrode covered with the pressurizing valve having a reaction force lower than the critical pressure of the liquefied gas on the housing side in order to cause dielectric breakdown in the area where the space, enclosed by the contact surface of the rotor with the housing and the vane 166, begins to increase.

The welding of the present invention, unlike general welding, is instantaneous intermolecular bonding that is not affected by the thermal diffusivity or thermal conductivity of the materials to be welded. Therefore, the materials to be welded are not limited to the type of metal, and it is also possible to weld non-metals together or metals and non-metals together. The welding principle is that a capacitor with a liquid dielectric between the surfaces of the materials to be welded is formed, the equivalent circuit is a composite dielectric capacitor with a solid dielectric or metal between positive and negative collector electrodes, a liquid dielectric is sandwiched between the surfaces of the materials to be welded, and breakdown is caused in the liquid dielectric, and thus, the pulse heat generated completes welding. The shape of the materials to be welded is a parallel plate or coaxial concave/convex conical electrode, the non-metallic materials are ceramics, high molecular materials, wood, paper, rubber, paint, or plastics, and pure water, oil or alcohol is used as the liquid dielectric. The liquid dielectric sandwiched between the materials to be welded is a variable capacitance capacitor that is regarded as a sealed electrode chamber covered by a wall of atmospheric air due to the meniscus force. With the variable capacitance capacitor charged, the gap between the positive and negative electrodes is shortened by the pressure-giving/pressure-receiving device until just before a short circuit to cause dielectric breakdown, and pressure application is continued until the completion of welding, even after the breakdown, whereby it is characterized.

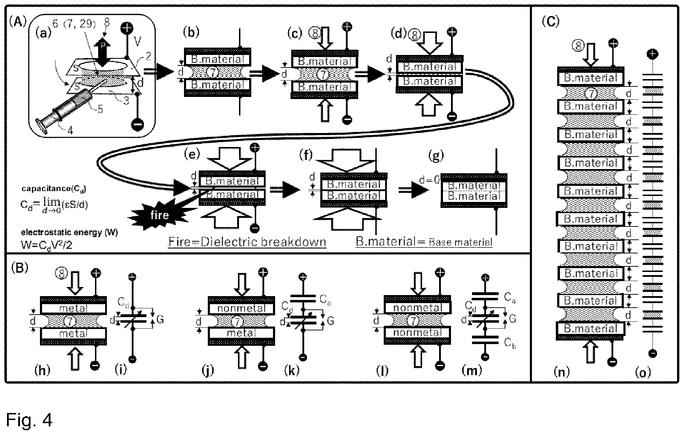

Figure 4(A)(a) shows a schematic diagram of inserting a liquid dielectric between the materials to be welded. As shown in (b,c,d,e,f,g), the space between a pair of materials to be welded (base materials) is compressed by the external pressure pressurizing device 8 to narrow the thickness d of the liquid dielectric thin layer (lim[d→0]Sε/d=∞), causing dielectric breakdown (fire) as in (e), further compression as in (f), and intermolecular force welding is completed when d=0 as in (g).

In FIG. 4(B), the materials to be welded are classified as metals together (h), non-metal and metal (j), and non-metals together (I), and the corresponding equivalent circuits are shown in (i,k,m). Non-metals are considered as solid dielectrics. It is the first dielectric capacitor 21 when the materials to be welded (base metals) sandwiched between positive and negative electrode plates 10 and 11 are metals; it is the second dielectric capacitor 22 when the materials to be welded are metal 19 and non-metal 20; and it is the third dielectric capacitor 23 when the materials to be welded are non-metals 20. The liquid dielectric thin layer 7 is supplied with liquid dielectric 5 by the liquid pressurizing device 4 and pressurized by the pressure tool for inducing dielectric breakdown 27 (external pressure pressurizing device 8) to reduce the thickness of the liquid dielectric thin layer 7 extremely, by which dielectric breakdown is caused. Here, in the presence of pulse heat generated by dielectric breakdown, a load is applied by the external pressure pressurizing device 8 to perform intermolecular force welding.

Figure 4(C) shows a schematic diagram and equivalent circuit of plywood welding. In this method, pure water is sandwiched between multiple material surfaces to be welded, a surface load is applied, an electric charge is applied when the thickness of the pure water is thin, and a load is further applied to cause dielectric breakdown, and thus intermolecular force surface welding is performed. Figure 4(C)(n) shows a schematic diagram of multilayer welding, in which three or more base materials to be welded are stacked to form a multilayer composite dielectric capacitor where a liquid dielectric thin layer 7 is sandwiched between a pair of solid surfaces 2, 3. Then, dielectric breakdown is caused when compressed with an external pressure pressurizing device 8, and the load is continued with the external pressure pressurizing device 8 (pressure tool for inducing dielectric breakdown 27). This load applies equal pressure to all the liquid dielectric thin layers 7 of the multilayers so that the capacitance reaches its maximum value just before dielectric breakdown, and although the voltage is low, the capacitance is high and the electrostatic energy is high, and furthermore, dielectric breakdown occurs at the same time to perform intermolecular force welding.

The liquid dielectric thin layer 7 is sandwiched between a pair of solid surfaces 2, 3 between positive and negative electrodes, and an electric charge is applied between the positive and negative electrodes while the positive and negative electrodes are compressed by an external pressure pressurizing device 8. The liquid dielectric thin layer is irradiated with microwaves or evacuated/reduced pressure to induce dielectric breakdown, and intermolecular welding can be performed.

When the liquefied gas is sealed in a container and a strong electric field is applied, a liquefied gas vaporizes and expands to generate a pressure 250 to 1000 times as large as the original pressure. The device for instantaneously jetting expanded gas is used in rockets and blasting devices. The device to apply this strong electric field is the gas jet dielectric breakdown-inducing igniter. After a gas that liquefies under pressure at room temperature, made of heteronuclear diatomic molecules with a critical temperature of 273K or higher, is enclosed in the gas jet dielectric breakdown-inducing igniter, and the insulating partition wall is sealed with the function for opening/closing the insulating partition wall, breakdown is caused in the liquid dielectric by applying a voltage higher than its dielectric strength, and the jet gas generated by dielectric breakdown is converted into thrust power of rockets or explosive power of blasting devices; which is the device for instantaneously jetting expanded gas.

The device for instantaneously jetting expanded gas is equipped with at least one gas jet dielectric breakdown-inducing igniter, and pure water or a gas that liquefies under pressure at room temperature is enclosed in the gas jet dielectric breakdown-inducing igniter (sealed electrode chamber). In the case of a blasting device, the liquefied gas is completely sealed. And, in the case of a rocket engine, the gas jet nozzle is covered with the pressurizing valve having a reaction pressure lower than the critical pressure of the liquefied gas, the pressurizing valve can be opened by the exhaust gas pressure of the vaporized gas, higher than the critical pressure of the liquefied gas, and the nozzle is provided in the rear portion of the pressurizing valve. After this liquid dielectric is charged, a voltage equal to or greater than the dielectric strength is applied to cause breakdown in the liquid dielectric, and thus, the exhaust pressure of the vaporized gas having an expanded volume is converted into energy.

The engine device of the present invention is an engine that does not involve the combustion of fuel and air, and does not consume fuel, unlike conventional engines. The operating principle is that a dielectric breakdown is caused in a gas that liquefies under pressure at the room temperature, and the volumetric expansion of the gas generated by vaporization is used as the driving force, and part of the driving force is used to pressurize the vaporized gas and re-liquefy it. This is an engine that repeats this operation, and it is desirable that the liquefied gas for the engine is a gas at room temperature, simply liquefied by compressing, has a high dielectric constant, and has a high-volume expansion ratio between the liquefied gas and the vaporized gas.

These liquefied gases, in order of low compression, are butane (2.1 atm), sulfurous acid gas (3.2 atm), propane (8.5 atm), ammonia (8.7 atm), chlorine (10 atm), carbon dioxide (20 atm), and fluorocarbon gas (40 atm). Liquefied gases with a high-volume expansion ratio between the liquefied gas and the vaporized gas are ammonia (890 times), butane (240 times), propane (320 times), chlorine (460 times), and carbon dioxide (520 times).

Considering these, butane and ammonia are the most suitable. On the other hand, pure water (1240 times, 0 atm) becomes water vapor at 100°C or higher and has a high-volume expansion ratio, and condenses below 100°C, making it an attractive liquefied gas that does not require pressurization. When these characteristics are considered, butane, propane, ammonia, carbon dioxide or pure water is optimal as a gas that liquefies under pressure at room temperature.

This engine device is a reciprocating engine or a rotary engine, equipped with a gas jet dielectric breakdown-inducing igniter and a pressure-exerting/drive-transmission function for converting the vaporized gas expanded during evaporation into drive power.

Of the reciprocating engine, the positive and negative electrodes are composed of parallel plate electrodes that one of the electrodes is the cylinder face, a fixed component, and the other is the piston head, and the piston head comes close to the cylinder face to induce dielectric breakdown, and at least one of the coaxial circular electrodes consisting of the coaxial cylindrical electrode, the coaxial conical electrode, or said coaxial multistage cylindrical electrode, which is provided either on the cylinder face, a fixed component, or on the piston head, a moving component, and the piston head comes close to the face of the gas jet dielectric breakdown-inducing igniter to induce dielectric breakdown.

In particular, this invention proposes a double-acting reciprocating engine in which two reciprocating engines are arranged in series and share a piston. This double-acting reciprocating engine is characterized by having the first and the second gas jet dielectric breakdown-inducing igniter electrode chambers 41, 42, equipped with at least one gas jet dielectric breakdown-inducing igniter at each end of the cylinder, that sandwich the first and second piston faces, and by performing the following operations in conjunction: expanding the liquefied gas during evaporation in the first gas jet dielectric breakdown-inducing igniter electrode chamber 41, compressing the first piston face, transmitting the driving force out of the system by the interlocked connection rod, and simultaneously compressing the second piston face to liquefy the gas in the second gas jet dielectric breakdown-inducing igniter electrode chamber 42.

Rotary engines include a rotary engine with a circular rotor and a rotary engine with a triangular rotor. The rotary engine with a circular rotor is characterized by having at least one coaxial cylindrical electrode on the rotor face, a moving component, and the housing face, a fixed component, and the rotor face, a moving component, come close together to induce dielectric breakdown. In the rotary engine with a triangular rotor, one method is that at least one coaxial cylindrical electrode is placed vertically on the surface where the curvature of the housing face, a fixed component, agrees with that of the rotor face, and the rotor face, a moving component, comes close to induce dielectric breakdown, and another method is that at least one coaxial cylindrical electrode is placed vertically on the surface where the curvature of the rotor face, a moving component, agrees with that of the housing face, and the cocoon-shaped housing face, a fixed component, and the rotor face, a moving component, come close together to induce dielectric breakdown.

Conventional rotary engines require machining of the rotor into a triangle and the housing into a cocoon-shaped trochoidal curve, but the rotary engine with a circular rotor has a rotor and housing that are both circular, making machining easier. This rotary engine with a circular rotor can be classified into two: a cam-type rotary engine equipped with at least one vane on the stator housing side, and a vane-type rotary engine equipped with two vanes on the rotor side. In the vane-type rotary engine, a coaxial cylindrical electrode with an inlet and a jet nozzle being separate is provided as a gas jet dielectric breakdown-inducing igniter on the housing surface side; in the cam-type rotary engine, a gas jet dielectric breakdown-inducing igniter whose inlet for the liquid dielectric and jet nozzle for the vaporized gas are one and the same is provided on the rotor surface side.

The double-acting reciprocating engine can be used in a linear generator and a dielectric heating device wherein the pressure-exerting/drive-transmission function device is provided with a magnet, a heating/cooling device wherein said pressure-exerting/drive-transmission function interlocks with a pump for adiabatically expanding or adiabatically compressing gas for heating/cooling, an air jet wherein the pressure-exerting/drive-transmission function interlocks with a pump for adiabatically expanding or adiabatically compressing atmospheric air, a water jet wherein the pressure-exerting/drive-transmission function interlocks with a pump for adiabatically expanding or adiabatically compressing seawater, lake water, and river water, and a generator wherein the piston head in the cylinder of the double-acting reciprocating engine 63 is replaced with a magnet and a coil is provided on the outer wall of the cylinder.

In particular, the power generation by the double-acting reciprocating engine 63 of the present invention is highly energy efficient because it does not convert a magnetic field into rotational motion, but directly converts it into electrical energy.

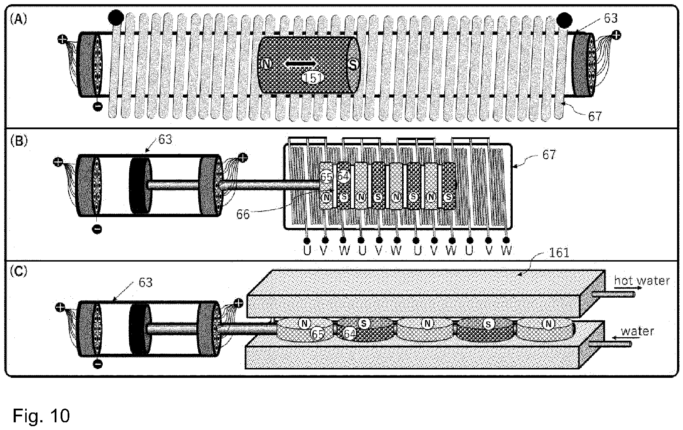

As shown in FIG. 10(B), in the double-acting reciprocating engine 63 that repeats reciprocating motion, the connecting rod 32 that interlocks with the movement of the piston 31 is equipped with a movable member consisting of multiple tubular permanent magnets 64, 65 and iron poles 66, and a stator with multiple coils in series along the circumference of the movable member, and the movable member reciprocates inside the stator to generate power, which is the linear power generation device.

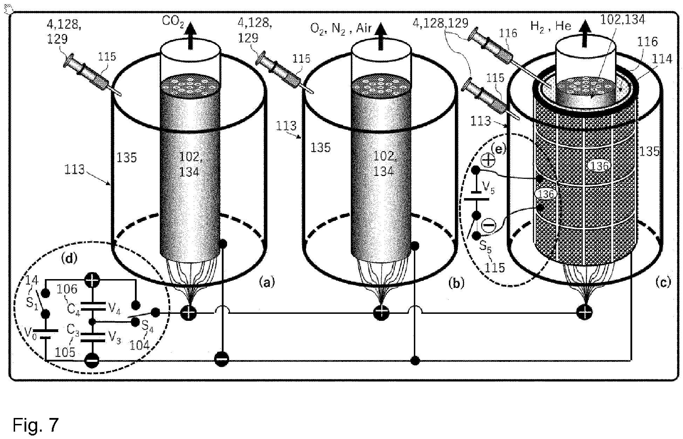

As shown in FIG. 2(A)(b), the discharge schematic diagram of the vaporized gas volume expansion drive device (engine) by dielectric breakdown induction, the liquid dielectric thin layer 7 is instantly vaporized to expand the volume by utilizing the extremely short pulse heat generated by dielectric breakdown. In the state where high electrostatic energy is stored at high withstand voltage in the liquid dielectric thin layer 7 made of compressed liquefied gas, a high voltage is applied furthermore or the liquid dielectric thin layer is shortened, or microwave is irradiated to induce dielectric breakdown, and the volume expansion of the gas vaporized from the liquid dielectric thin layer 7 is used for the vaporized gas volume expansion drive device for vehicles, ships, and generators, or the buoyancy bag 110 for mining seabed resources (FIG. 7).

Figure 6(A, B) shows a schematic diagram of a double-acting reciprocating engine 63. There are two explosion parts of the engine, separated by the piston 31 in the cylinder 30 of this engine device. Figure 2 (A)(b) shows schematic diagrams of the charging circuit and the double-acting reciprocating engine with its drive part. As shown in FIG. 6(A, B), the first gas compression/expansion chamber 41 and the second gas compression/expansion chamber 42, which share the piston 31, at both ends of the cylinder 30, alternately repeat compression and expansion. The reciprocating motion of this piston is converted into energy through the connecting rod 32 and the crankshaft 33.

The feature of the present invention is nothing but a variable capacitance capacitor that changes the thickness (d) of the liquid dielectric thin layer. The capacitor continues to charge until just before a short circuit occurs between the two electrodes due to dielectric breakdown by the charge/discharge control function 13, and dielectric breakdown occurs at the moment when the liquid dielectric thin layer has the maximum capacitance. As shown in Figure 2 (A)(b), the second switch 15 is turned off during the dielectric breakdown, so the first capacitor (C₁) 16 does not over-discharge.

The rotary engine of the present invention, which does not involve combustion, does not have carbon deposits, and so does not experience compression loss; it is considered to be an optimal engine that overcomes the shortcomings of conventional rotary engines.

As shown in FIG. 6(C, D), the engine is equipped with the edges of the triangular rotor 46 that rotates inside the housing 45 and three flexible crescent-shaped sealed containers to be enclosed in the housing 45. The gas in each sealed container is pressurized and liquefied, and then vaporizes due to dielectric breakdown, causing a volume expansion and conversion to rotational energy. The housing 45 as in FIG. 6(C) is equipped with four gas jet dielectric breakdown-inducing igniters 145, and dielectric breakdown occurs 12 times per rotation on the surface where the housing surface and rotor surface come into contact. Similarly, as shown in FIG. 6(D), the rotor 46 has two gas jet dielectric breakdown-inducing igniters 145 embedded in each edge (six in total), and dielectric breakdown occurs 12 times per rotation on the surface where the housing surface and rotor surface come into contact.

In the cam-type rotary engine of FIG. 6(E), one gas jet dielectric breakdown-inducing igniter 145 is embedded in the circular rotor 169, and after the circular rotor 169 passes the vane 166, the vaporized gas jet nozzle 171 of the gas jet dielectric breakdown-inducing igniter 145 and a conductive metal surface for inducing dielectric breakdown 170 come into contact to make two dielectric breakdowns occur per rotation.

In the vane-type rotary engine of FIG. 6(F), one coaxial cylindrical electrode with an inlet and a jet nozzle being separate 172 is provided on the housing 45 side where the circular rotor 169 and the housing 45 come into contact, and one dielectric breakdown occurs per rotation.

To lift up seabed resources, water pressure must be overcome. For example, the water pressure at a depth of 10,000m is 1,000 atmospheres, so to raise 1 ton of ore underwater, a 1m³ buoyancy bag must be filled with gas at 1,000 atmospheres. However, once the ascent begins, the hydrostatic pressure decreases in proportion to the decrease in depth, and the volume of the buoyancy bag increases, allowing the towing load of ore to also increase. In other words, if the volume of the buoyancy bag is increased slightly while maintaining a pressure equal to the hydrostatic pressure in the volume-variable buoyancy bag at the start of the ascent, the ore can be lifted to the surface without consuming mechanical energy.

Due to this relationship between hydrostatic pressure and buoyancy, if a buoyancy bag is placed halfway between the surface and the seabed, and towed with a long rope, a heavy object can be raised with a relatively small internal pressure of the buoyancy bag.

In the present invention, in order to instantly produce a large amount of high-pressure gas in the sea, the high hydrostatic pressure of the deep sea is utilized to compress the buoyancy gas and produce a liquefied gas (heteronuclear diatomic molecules or homonuclear diatomic molecules). By causing dielectric breakdown in the liquefied gas, a large quantity of the buoyancy gas is produced; which is repeated at high frequency. The gas is forced into the buoyancy bag 110, the volume of the buoyancy bag 110 is reduced while maintaining a pressure equal to the hydrostatic pressure, and the descent continues to the seabed. At the seabed, a pressure equivalent to the buoyancy is forced into the buoyancy bag 110 by the time the loading of useful minerals is completed, and then the ascent begins. As it rises, the volume-variable buoyancy bag spontaneously expands and the buoyancy increases. Here, the volume of the buoyancy bag 110 is fixed, and the gas in the buoyancy bag is liquefied to reduce the gas pressure in the bag to adjust the buoyancy and ascending speed.

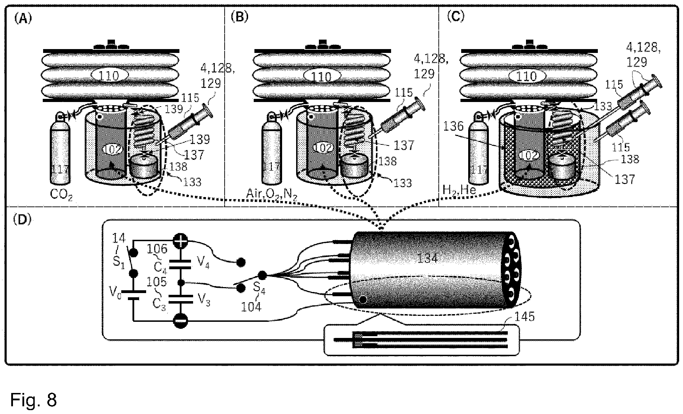

For example, when nitrogen gas is liquefied, its volume is reduced by 1/650 times, and hydrogen by 1/790 times. Figure 7(a,b,c) shows the liquefaction device for buoyancy gas; the device that has the function for adjusting difference between hydrostatic pressure and the internal pressure of buoyancy bag in addition to the liquefied gas production device is shown in FIG. 8. When used as buoyancy gas for the buoyancy bag 110 of a submersible for lifting resources or heavy loads from the seabed, the liquefied gas is instantly vaporized at the time of surfacing to expand the volume of the buoyancy bag 110 by the amount of buoyancy, and the buoyancy bag starts to rise. However, as in Patent Literature 4, the water pressure decreases as the buoyancy bag rises, and the volume of the buoyancy bag 110 expands. For example, the volume at the bottom of the sea in 10,000 m deep expands 1,000 times at the sea surface. Therefore, part of the vaporized gas in the buoyancy bag 110 is liquefied during surfacing. By this operation, the balance between the internal pressure in the buoyancy bag and the water pressure outside the buoyancy bag is controlled by the gas recovery function 133 to keep the volume of the buoyancy bag 110 constant. The internal pressure of the buoyancy bag is made lower than the water pressure during descent. To liquefy this vaporized gas, hydrostatic pressure is applied to the liquefied natural gas to cool it down to the critical temperature of the gas as a buoyancy gas. This cooling causes the liquefied gas to instantly vaporize with pulsed heat by the electrode for inducing dielectric breakdown 134 that is connected to the buoyancy bag 110, causing the buoyancy bag 110 to rapidly expand and begin floating. Meanwhile, the internal pressure of the buoyancy bag 110, which increases as the buoyancy bag rises, liquefies part of the vaporized gas in the buoyancy bag 110, maintaining a balance between the internal pressure and the external pressure of the buoyancy bag 110, allowing the buoyancy bag 110 to float.

The buoyancy device for mining seabed resources is a device wherein a liquified gas made of heteronuclear diatomic molecules or homonuclear diatomic molecules is injected into the gas jet dielectric breakdown-inducing igniter 145 as a dielectric breakdown-inducing electrode, and then, dielectric breakdown is very frequently repeated, and thus, a large amount of vaporized gas made of the heteronuclear diatomic molecules or the homonuclear diatomic molecules having pressure higher than hydrostatic pressure is instantaneously filled in the buoyancy bag 110, and moreover, in order to suppress the volume expansion of the buoyancy bag 110 during ascending, the vaporized gas, after having being filled in, is liquefied while maintaining balance between the internal pressure of the buoyancy bag 110 and the hydrostatic pressure.

The buoyancy device for mining seabed resources is equipped with function for adjusting balance between the internal pressure of a buoyancy bag and hydrostatic pressure. When using said device, a vaporized gas, made of at least one of the following liquefied gases, expanded during evaporation, is injected in the buoyancy bag 110, and the balance between the internal pressure of the buoyancy bag and the hydrostatic pressure is adjusted during descending to and ascending from the seabed:
1) carbon dioxide made of heteronuclear diatomic molecules, which is a gas that liquefies under pressure at room temperature:
2) a gas that liquefies under pressure at low temperature, made of homonuclear diatomic molecules, having a critical temperature of 237K or lower with the exception of halogen, or a gas that liquefies under pressure at room temperature:
3) in case that the boiling point of the homonuclear diatomic molecules is equal to or higher than that of the neon,
   liquefied homonuclear diatomic molecules produced by cooling the homonuclear diatomic molecules, that was compressed using the pressurizing function, with the gas that liquefies under pressure at room temperature:
4) in case that the boiling point of the homonuclear diatomic molecules is equal to or lower than that of the neon,
   liquefied hydrogen produced by compressing the hydrogen, cooled with the liquefied neon, that was produced by compressing a gas mixture containing the gas that liquefies under pressure at room temperature and homonuclear diatomic molecules with the pressurizing function and moreover, by cooling the liquefied homonuclear diatomic molecules with the thermoelectric element cooling function:
5) in case that the boiling point of a rare gas is lower than that of said neon, liquefied helium produced by compressing the helium, cooled with the liquefied neon, that was produced by compressing a gas mixture containing the gas that liquefies under pressure at room temperature and homonuclear diatomic molecules with the pressurizing function and moreover, by cooling the liquefied homonuclear diatomic molecules with the thermoelectric element cooling function.

At a depth of 10,000 m, the water pressure is 1,000 atmospheres. To bring up seabed resources from this depth, the internal pressure of the buoyancy bag 110 needs to be more than 1,000 atmospheres. If the buoyancy bag starts to rise in this state, as the depth becomes shallower, the external pressure of the buoyancy bag decreases at a rate of 0.1 atmospheres per meter, and the volume of the buoyancy bag 110 expands by 0.1 times per meter, and the volume becomes 1,000 times larger when it reaches the surface. The volume of the buoyancy bag 110 can be increased or decreased by several times by controlling the volume with the buoyancy bag volume adjustment device 111, but to control the volume 1,000 times large requires a huge buoyancy bag, which is uneconomical.

The internal and external pressures of the buoyancy bag 110 change according to the depth. In this invention, therefore, in order to keep the internal and external pressures of the buoyancy bag 110 constant, the volume change in the buoyancy bag 110 is totally eliminated by liquefying a part of the heteronuclear diatomic molecules or homonuclear diatomic molecules in the buoyancy bag 110 (FIG. 8).

Figure 8(A,B) shows the schematic diagram of buoyancy gas liquefaction and a device for controlling an international pressure of a buoyancy bag. The device is equipped with a gas recovery function 133 to recover by liquefying the gas (nitrogen, oxygen, air, carbon dioxide) in the buoyancy bag 110. This gas recovery function 133 is so constructed that a thin tube 137 and a liquefied gas storage container 138 are immersed in liquefied propane in order for the gas in the buoyancy bag 110 to be liquefied in the thin tube 137 and for the liquefied gas to be recovered in the liquefied gas storage container 138.

If the gas is hydrogen, as shown in FIG. 7(C), the first and second coaxial cylindrical refrigerant containers 113, 114 are used, and the thin tube 137 and the gas storage container 138 are immersed in the second coaxial cylindrical refrigerant container 114 wherein liquefied neon is injected as a refrigerant. This second coaxial cylindrical refrigerant container 114 is cooled with liquefied neon produced by cooling with the thermoelectric element cooling function as supplement. And the gas in the buoyancy bag 110 floats while balancing with the water pressure corresponding to the water depth. The dielectric breakdown-inducting circuit is shown in FIG. 8(D).

To surface 1 ton of ore underwater, a buoyancy bag with a volume of 1 m³ must be filled with gas of 1,000 atmospheres. Here, a method is proposed to produce a large volume of buoyancy gas in a short time under high pressure in the deep sea by using a double-acting reciprocating engine.

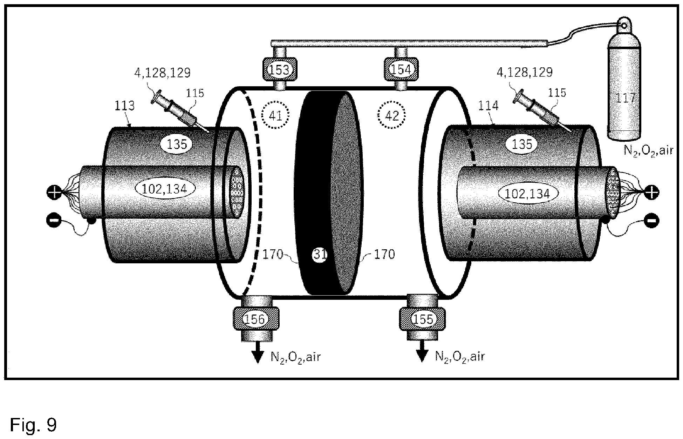

As shown in FIG. 9, there are the first gas compressing/expanding chamber 41 and the second gas compressing/expanding chamber 42 with the piston in-between in the cylinder, and both faces of the piston, the first piston face and the second piston face, act as a conductive metal surface for inducing dielectric breakdown 170, respectively, and the conductive metal surface for inducing dielectric breakdown 170 comes close to a metal coaxial cylindrical electrode group 102 to induce dielectric breakdown. The first and the second gas compressing/expanding chambers 41, 42 are equipped with first and second buoyancy gas injection function valves 153, 154 as well as first and second buoyancy gas ejection function nozzles 155, 156 respectively. The chambers 41, 42 are also provided with the first and the second metal coaxial cylindrical electrode groups 102, composed of at least one gas jet dielectric breakdown-inducing igniter 145, and equipped with the first and the second coaxial cylindrical refrigerant containers 113, 114 for cooling the first and the second buoyancy gases in the first and second metal coaxial cylindrical electrode groups 102, respectively; whereby dielectric breakdown is induced at one of the first and second metal coaxial cylindrical electrode groups 102 to produce high pressure buoyancy gas, and at the other, the buoyancy gas injected through the buoyancy gas injection function valve 153 or 154 is liquefied by compression, and then, the buoyancy gas is pressed into the buoyancy bag 110 via the buoyancy gas ejection function nozzle 156 or 155. These operations are repeated in the metal coaxial cylindrical electrode groups 102 provided on both ends of the cylinder and in the first and second gas compressing/expanding chambers 41, 42 by turns, thus producing high pressure buoyancy gas in a short time.

Conventional batteries have low electromotive force, and are of a short service life due to chemical reactions and heavy. In contrast, capacitors (variable high voltage power supply with high dielectric strength) only store electrons, do not undergo chemical reactions, and are light in weight. Moreover, high-voltage discharge is possible by expanding the distance between the electrodes of the capacitor, and voltage can be varied by changing the distance between the electrodes after charging. If a liquid dielectric with a high dielectric constant and high dielectric strength is used, it is of much practical use as an on-board power supply for automobiles.

In the variable high voltage power supply with high dielectric strength, the positive and negative electrodes of the sealed electrode chamber are metal electrodes composed of parallel plates or a coaxial cone; a liquid dielectric with high dielectric strength is filled between the positive and negative electrodes, and the gap between the electrodes is widened by a pressure-giving/pressure-receiving device, and thus, a variable capacitance capacitor can be charged with a high voltage. The liquid dielectrics with a high dielectric constant and high dielectric strength are pure water, alcohols, and aromatic compounds.

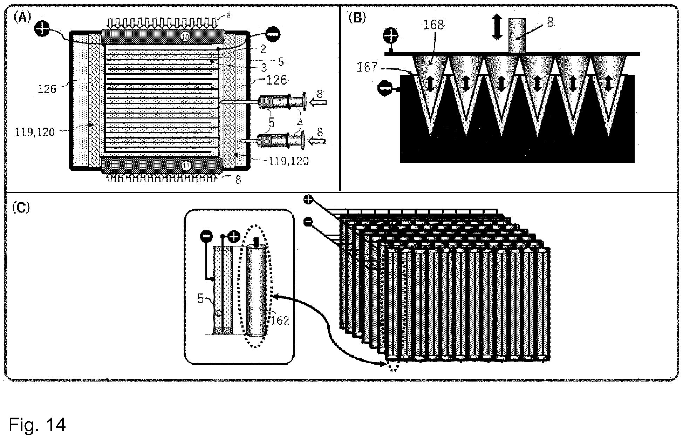

In the present invention, as shown in FIG. 2(B)(c) and FIG. 14(A,C), when the electrostatic energy stored in the liquid dielectric thin layer 7 is used outside the system, the solid materials 2, 3 are metals 19, and a capacitor (C_{d}) is formed between the positive and negative electrodes 10, 11 to sandwich the liquid dielectric thin layer 7, and the thickness (d) of the liquid dielectric thin layer 7 is increased to a desired withstand voltage by the liquid pressurizing device 4 and/or the external pressure pressurizing device 8. Then, the capacitor is charged at a voltage lower than the withstand voltage, and moreover, the voltage drop due to continued discharge is corrected through increase in output voltage, by decreasing capacitance through increase in the thickness of the liquid dielectric thin layer 7 with a decreased pressure by an external-pressure pressurizing device 8. The variable high voltage power supply with high dielectric strength consists of such variable electrostatic liquid dielectric capacitor.

Figure 2(B)(c) shows the schematic diagram of the variable high voltage power supply with high dielectric strength in the form of an electric circuit and of a state in which the dielectric strength is increased by increasing the thickness (d) of the liquid dielectric thin layer 7, and FIG. 4(C) is the schematic diagram of the power supply in the form of a state in which a plurality of pairs of capacitors are connected in parallel to charge.

The parallel-connected capacitors are variable capacitance liquid dielectric capacitors in which a pair of plane plates are made of metal. As shown in the schematic diagram of FIG. 2(A), when increasing the thickness (d) of the liquid dielectric thin layer 7, the capacitance (C_{d}) is reduced, but the dielectric strength is increased. On the other hand, electrostatic energy (W_{d}) is proportional to the square of the voltage (V₁). For this reason, it is more advantageous to increase the voltage (V₁) even at the expense of the capacitance (C_{d}) in terms of energy utilization. If a dielectric with high dielectric strength is used, a high-voltage capacitor can be realized simply by increasing the charging voltage. In particular, if a liquid is used as the dielectric, the thickness (d) of the liquid dielectric thin layer 7 can be increased or decreased simply by controlling the liquid pressure.

As shown in FIG. 14 (A), if the liquid dielectric 5 is inserted with the liquid pressurizing device 4, the thickness (d) of the liquid dielectric thin layer 7 increases, and a capacitor with high dielectric strength (C_{d}) is formed. Figure 14(A,C) shows the configuration of multiple pairs of this capacitor (C_{d}) connected in parallel. If this parallel capacitor is charged with a voltage (V₁) by the charging device 12 (FIG. 2), a capacitor with a dielectric strength of V₁ is created, and the capacitor becomes a variable high voltage DC power supply if it is pressurized/depressurized by the external pressure pressurizing device 8. A liquid dielectric with a high dielectric constant and high dielectric strength is appropriate for a capacitor for a variable high voltage power supply with high dielectric strength.

In a variable high voltage power supply with high dielectric strength, the dielectric strength of the gas in the insulating fluid 1 is low, and creeping discharge may occur. Therefore, in a high voltage DC power supply that requires high dielectric strength, the insulating fluid 1 is made of a liquid, and an interfacial tension conversion isolation membrane 119 made of a water-repellent porous fluororesin membrane 120 is provided to change the interfacial tension between the liquid dielectric 5 and the insulating fluid 1. Figure 14(A) is a schematic diagram showing the liquid dielectric 5 in close contact with the water-repellent porous fluororesin membrane 120. The role of the interfacial tension conversion isolation membrane 119 is that the water-repellent porous fluororesin membrane 120 allows gas to pass through but does not allow water to pass through. Therefore, if the water-repellent porous fluororesin membrane 120 is used for the window of the container, the container becomes sealed against water. However, when a water pressure equal to or higher than the water pressure resistance of the water-repellent porous fluororesin membrane 120 is applied, water passes through the water-repellent porous fluororesin membrane 120. In other words, the window of the sealed container can be opened and closed artificially by water pressure. Here, the essential part of the present invention is to use the hydrophobic porous fluororesin film 120 as an isolation membrane as a pressure switch.

In the present invention, as a means for increasing the dielectric strength, an elastic outer wall 118 is provided in the boundary between the insulating fluid 1 and the liquid dielectric thin layers 5, 6, 7, and in order to prevent the insulting fluid 1 from getting into the space between a pair of plane plates and to form a sealed container that encloses the liquid dielectric thin layers 5, 6, 7, the first hydrophobic porous fluororesin film 121 with water repellency and oil repellency is provided as a partition film/outer wall of sealed container 123. And the second hydrophobic porous fluororesin film 122 is provided as a partition film/insulating fluid inlet 124 for injecting the liquid dielectric 5 into the liquid dielectric thin layers 5, 6, 7, and the liquid dielectric 5 is injected/discharged by the liquid pressurizing device 4 through the second hydrophobic porous fluororesin film 122. Furthermore, the thickness of the liquid dielectric thin layers 5, 6, 7 is increased to a desired dielectric strength by utilizing the water repellency and the difference in water-resisting pressure of the hydrophobic porous fluororesin film 121, and then, the insulating fluid 1 is permeated into the hydrophobic porous fluororesin film 121 using the insulating fluid pressurizing device 9 to prevent creeping discharge, which is the high voltage DC power supply.

### Effects of the Invention

According to the present invention, the withstand voltage can be controlled by increasing or decreasing the thickness of the liquefied gas thin layer sandwiched between the positive and negative electrodes; by thinning the liquefied gas thin layer, dielectric breakdown is induced to use the thermal energy generated by the breakdown for surface welding, engine devices, or producing buoyancy gas of buoyancy bags for mining seabed resources, or by thickening it, the liquefied gas thin layer is provided as a capacitor for a variable high voltage power supply with high dielectric strength.

### BRIEF DESCRIPTION OF THE SEVERAL VIEWS OF THE DRAWING

FIG. 1 shows a flow chart of the production process of the industrial devices, classified by application, utilizing dielectric breakdown and withstand voltage reinforcement of liquid dielectric thin layers.
FIG. 2 shows a classification by industrial application devices with/without dielectric breakdown of liquid dielectric thin layers.
FIG. 3 shows a formula for electric field strength, schematic diagrams of the electrode and its internal structure, and distribution map of electric field strength, by parallel plates electrode as in (A) or coaxial cylindrical/conical electrodes as in (B) for inducing dielectric breakdown.
FIG. 4 is a schematic diagram of intermolecular force surface welding by dielectric breakdown in liquid dielectric thin layers wherein: (A) shows the process from charging a liquid dielectric by applying pressure to dielectric breakdown/welding, (B) shows the equivalent circuit of welding base materials (metals together, metal and non-metal, non-metals together), and (C) shows the equivalent circuit of welding plywood.

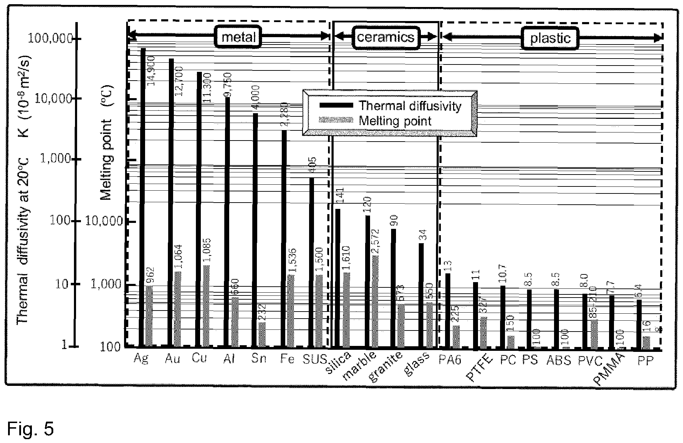

FIG. 5 is a bar graph which shows the thermal diffusivities and melting points of materials to be welded (metals, ceramics, plastics).
FIG. 6 shows schematic diagrams of double-acting reciprocating engines and rotary engines wherein: (A) is a double-acting reciprocating engine with a parallel plates electrode, (B) is a double-acting reciprocating engine with a gas jet dielectric breakdown-inducting igniter, (C) is a rotary engine with a triangular rotor, with a gas jet dielectric breakdown-inducting igniter in the housing, (D) is a rotary engine with a triangular rotor, with a gas jet dielectric breakdown-inducting igniter in the rotor, (E) is a cam-type rotary engine, and (F) is a vane-type rotary engine.
FIG. 7 shows a schematic diagram of a device for producing buoyancy gas by dielectric breakdown wherein: (a) is dielectric breakdown in carbon dioxide by cooling with liquefied butane gas, (b) is dielectric breakdown in nitrogen, oxygen, and air by cooling with liquefied propane gas, and (c) is a production of liquefied neon gas using liquefied propane gas and electronic refrigeration elements, and dielectric breakdown in hydrogen and helium.
FIG. 8 shows a schematic diagram of buoyancy gas liquefaction and a device for controlling the internal pressure of a buoyancy bag wherein: (A) is dielectric breakdown in carbon dioxide by cooling with liquefied butane gas and the device for controlling the internal pressure of a buoyancy bag, (B) is dielectric breakdown in nitrogen, oxygen, or air by cooling with liquefied propane gas and the device for controlling the internal pressure of a buoyancy bag, (C) is a production of liquefied neon gas using liquefied propane gas and electronic refrigeration elements, dielectric breakdown in hydrogen or helium, and the device for controlling the internal pressure of a buoyancy bag, and (D) is a dielectric breakdown-inducing circuit for metal coaxial cylindrical electrodes using dielectric breakdown induction electrodes.
FIG. 9 shows a schematic diagram of a high-speed production device for buoyancy gas using a double-acting reciprocating engine.
FIG. 10 shows a schematic diagram of a magnetic induction device using a double-acting reciprocating engine wherein: (A) is the diagram of a linear power generator using a magnet as a piston inside a cylinder, (B) is the diagram of a three-phase AC power generator that moves a group of cylindrical magnets outside the engine, and (C) is the diagram of a device that uses magnetic induction to heat water by moving a group of cylindrical magnets outside the engine.

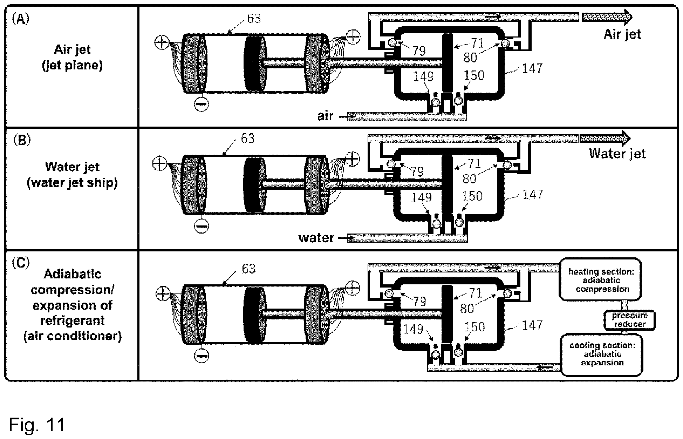

FIG. 11 shows a schematic diagram of a device that drives a compressor with a double-acting reciprocating engine wherein: (A) is an air jet compressor that inlets and jets out air, (B) is a water jet compressor that inlets and jets out seawater/lake water, and (C) is a heating/cooling device that inlets and jets out a gas for air conditioner, and repeats adiabatic expansion/compression.

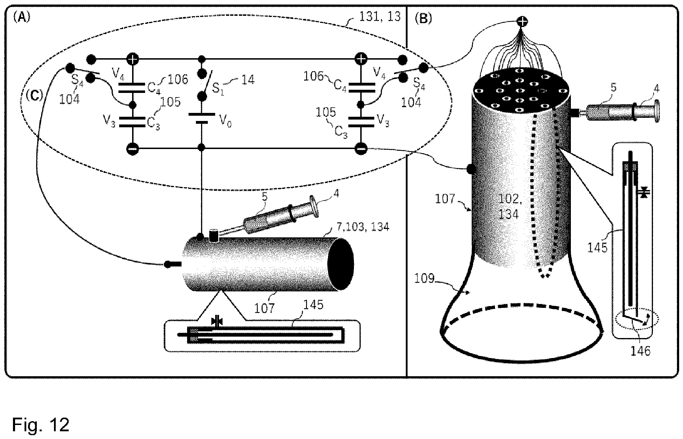

FIG. 12 shows the schematic diagrams of a blasting device as in (A) and a rocket engine as in (B) that utilize dielectric breakdown in a liquid dielectric thin layer.

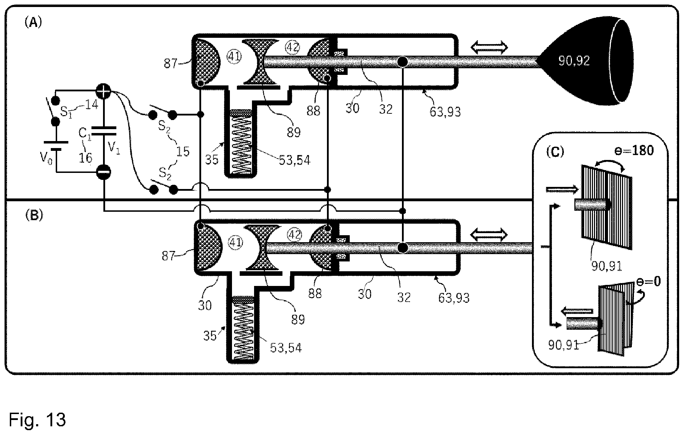

FIG. 13 shows a schematic diagram of a ship driving device that uses a double-acting reciprocating engine with concentric spherical electrodes wherein: (A) is the diagram of a streamlined, wine glass-shaped propulsion device, and (B) is the diagram of a propulsion device with a board for kicking water.
FIG. 14 shows a schematic diagram of a variable high voltage power supply with high dielectric strength wherein: (A) is the diagram of a horizontal high-voltage capacitor (with insulating fluid), (B) is the diagram of a variable voltage capacitor using concave-convex conical electrodes, and (C) is the diagram of an on-board high voltage power supply for vehicles with coaxial cylindrical capacitors in parallel connection.

### DETAILED DESCRIPTION OF THE INVENTION

Effective embodiments of the present invention will be described in detail below with reference from FIG. 1 to FIG. 14.

FIG. 4(A)(a) is a schematic diagram of a variable liquid dielectric capacitor C_{d} 24 in which a liquid dielectric (thin layer) 5, 6, 7 inserted between a pair of solid surfaces 2, 3 is sandwiched between positive and negative electrodes 10, 11. FIG. 4(B)(j) and FIG. 4(B)(l) in which at least one of the pair of solid surfaces is made of a non-metal are applicable to flat surface welding, while FIG. 4(B)(h) with both sides made of metal is applicable to flat surface welding and engines. The back surfaces of the solid surfaces facing each other of these three cases are in close contact with the positive and negative electrodes 10, 11 to form a capacitor; the interspace between the positive and negative electrodes of this capacitor are "pressurized/decompressed" by the external pressure pressurizing device 8 or the pressure tool for inducing dielectric breakdown 27, the film thickness (d) of the liquid dielectric thin layer 7 is "decreased/increased", "dielectric breakdown is induced/withstand voltage becomes high", and thus the capacitor is adapted to "flat surface welding, engines, and high voltage DC capacitors" (FIG. 2). As shown in FIG. 4(B), the pair of solid surfaces are metals together (FIG. 4(B)(h,i)), metal and non-metal (FIG. 4(B)(j,k)), and non-metals together (FIG. 4(C)(l,m). Metal and metal welding was performed with Al/Cu and SUS/Cu, metal and non-metal welding was performed with Al/synthetic quartz glass, and non-metal and non-metal welding was performed with synthetic quartz glass/BK7 glass.

To perform welding, it is desirable for the materials to be welded to have low thermal diffusivity and low melting point. Another condition was that the diffusivity and melting point of the pair of materials to be welded were close to each other. Therefore, the diffusivity and melting point of metals, ceramics, and plastics were measured as typical materials to be welded; the results are shown in FIG. 5.

Pure water was sandwiched between a stainless steel plate (κ: 405) with low thermal diffusivity and a copper plate (κ: 11,300) with high thermal diffusivity, and after charging at DC = 20V, a load of 0.5MPa was further applied to perform surface welding of the stainless steel and copper.

Pure water was sandwiched between two synthetic quartz plates (κ: 141) with low thermal diffusivity, and after charging at DC = 200V, a load of 0.5MPa was further applied to perform surface welding of the synthetic quartz.

Pure water was sandwiched between a fluororesin plate (PTFE) (κ: 11) with low thermal diffusivity and polypropylene (PP) (κ: 6.4), and after charging at DC = 20V, a load of 0.5MPa was further applied to perform surface welding of the PTFE and PP.

FIG. 12(A) is the prototype of a blasting device in which a capacitor formed by injecting a liquid dielectric 5 between electrodes for inducing dielectric breakdown 134 (gas jet dielectric breakdown-inducing igniter 145) is housed in its sealed container 107. As shown in FIG. 12(A), a gas jet dielectric breakdown-inducing plug igniter 145 is provided as an electrode for inducing dielectric breakdown 134 in a cylinder with one side of the electrodes made of the whole metal coaxial cylindrical electrode group 102, pure water is injected as a liquid dielectric 5 into the electrode for inducing dielectric breakdown 134 by a liquid pressurizing device 4 to form a liquid dielectric thin layer 7. In a charge/discharge control function 13 added with a dielectric breakdown inducing circuit 131 (FIG. 12(C)), the third capacitor (C₃) 105 and the fourth capacitor (C₄) 106 are connected in series. The first switch 14 is turned ON to supply an electric charge, the fourth switch 104 is connected to the third capacitor (C₃) 105 to charge the interspace between the coaxial cylindrical electrodes 103, and the first switch 14 is turned OFF. Then, the fourth switch 104 is connected to the fourth capacitor (C₄) 106, and dielectric breakdown was induced by applying a voltage (V₃+V₄) equal to or greater than the withstand voltage to the interspace between the coaxial cylindrical electrodes 103. As in FIG. 12(B), a rocket engine is designed and fabricated by covering the metal coaxial cylindrical electrode group 102, consisting of metal electrodes for inducing dielectric breakdown 134, with a rocket nozzle 109. The liquid dielectric is pure water.

To prevent the double-acting reciprocating engine 63 from bursting due to the volume expansion drive device of the vaporized gas, gas is supplied from the first gas jet dielectric breakdown-inducing igniter electrode chamber 41 to the second gas jet dielectric breakdown-inducing igniter electrode chamber 42 via a bypass for replenishing vaporized gas 35 (FIG. 13(A,B)) that buffers the shock pressure of the volume expansion.

The bypass for replenishing vaporized gas 35 supplies the high-pressure gas whose volume has been expanded in one of the vaporized gas jet dielectric breakdown-inducing igniter electrode chambers 41, 42 to the other chamber. The bypass has such engine structure as: which is provided with a valve function using a piston 31 that cuts off the supply of vaporized gas 44 while liquefied gas 43 is being generated in one of the vaporized gas jet dielectric breakdown-inducing igniter electrode chambers, and a variable volume gas reservoir 56 equipped with a piston head 55 with a spring 54 in the bypass 35 in order to prevent the engine from bursting due to the volume expansion of the vaporized gas, and at least one gas pressure shock absorber (for shock prevention) 53 that has the function of pushing out the vaporized gas 44 trapped in the variable volume gas reservoir 56 to the other vaporized gas jet dielectric breakdown-inducing igniter electrode. When the electrodes are a hemi-concave spherical surface as one electrode and a hemi-convex spherical surface as the other electrode, the double-acting reciprocating engine 63, 148 as in FIG. 13 (A,B) is a double-acting reciprocating engine 63, 148 that uses a first spherical electrode 87, a second spherical electrode 88, and a concave spherical electrode/piston 89 to serve as a concave spherical electrode and piston. A high capacitance can be obtained since the surface area of the electrodes is large, and dielectric breakdown can be caused by a low voltage since the maximum electric field strength is obtained on the spherical electrode surface.

Two types of marine propulsion equipment 90 were made on an experimental basis, as shown in FIG. 13 (A,B,C); which converts the reciprocating motion of a double-acting reciprocating engine 63 into propulsive force via a rod 32 instead of a conventional screw propeller. The marine propulsion equipment 90 requires two forms: the first form that has a repulsive force with water required for the propulsion equipment to move forward, and the second form that has a weak repulsive force with a water resistance close to zero. The marine propulsion equipment 90 is divided into two cases in structure: one in which the propulsion equipment changes its shape (C), and the other in which the propulsion equipment does not change its shape (A) under water during reciprocating rectilinear motion, as in FIG. 13 (A,B,C). In the case of no shape change, a submersible hull cut type propulsion device (wine glass type) 90, 92 was made; which has the second form of a streamlined structure and the first form of an anti-streamlined structure: the first form is a plane or concave surface perpendicular to the axis of reciprocating rectilinear motion, and the second type is a streamlined convex surface to the axis of reciprocating rectilinear motion. In the case of shape change, a water kick board type propulsion device (kick plate) 91 was made; which is equipped with two plates that are flat or concave surface perpendicular to the axis of reciprocating rectilinear motion so that the first form is maximized, and the angle between the two plates is fixed at 180 degrees (θ = 180) only when pushing out water, and the angle between the two plates is automatically fixed at 0 degrees (θ ≧ 0) to satisfy the second form.

A parallel plate double-acting reciprocating engine 63 as shown in FIG. 6(A) was made on an experimental basis. The cylinder was an aluminum pipe (50φ) filled with butane gas, ammonia gas, or carbon dioxide as liquid dielectric gas, and dielectric breakdown was caused at DC 500 to 700 V, and continuous operation was performed for 60 minutes.

A cam-type rotary engine was fabricated using an aluminum housing (250x250x50) as shown in FIG. 6(C). The engine was filled with butane gas, and dielectric breakdown was caused by applying DC 400V. Continuous operation was performed for 120 minutes.

As shown in FIG. 10(A), a generator was made on a trial basis; wherein a circular magnetic piston was inserted into the cylinder (acrylic pipe with an inner diameter of 45 mm) of a double acting reciprocating engine 63, and a stator was installed that has a coil on the outer wall of the cylinder.

Since the critical temperatures of gases such as nitrogen and air are -147.1°C for nitrogen, -118.4°C for oxygen, and -140.7°C for air, propane gas (melting point: -190°C, boiling point: -45°C, critical temperature: +96.8°C, critical pressure: 4.25 MPa), which has a boiling point and a critical temperature higher than those of these gases, was used as the first supercritical fluid 115. Propane gas has a high critical temperature of +96.8°C, so when pressurized at room temperature, it begins to liquefy at 0.86 MPa. As shown in FIG. 7(a,b), propane gas was injected as the first supercritical fluid 115 into the first coaxial cylindrical refrigerant container 113 in which the metal coaxial cylindrical electrode group 102 was inserted. The critical temperature of the first supercritical fluid is +96.8°C and the critical pressure is 4.25 MPa; therefore, when pressurization was started at room temperature using the liquid pressurizing device 4, 128 and water pressure 129, liquefaction began at 0.86 MPa, and the internal pressure of the buoyancy bag 110 required for buoyancy was achieved.

The device shown in FIG. 7(c) was made on an experimental basis. Since the critical temperature of hydrogen is -240.18°C, neon gas (melting point: -249°C, boiling point: -246°C, critical temperature: -228.6°C, critical pressure: 2.76 MPa), which has a boiling point lower than this critical temperature, was selected as the second supercritical fluid 116. In order to liquefy neon gas, a critical temperature of -228.6°C is required, and three-stage cooling is performed. As in FIG. 7(c), propane gas is pressurized and injected as the first supercritical fluid 115 into the first coaxial cylindrical refrigerant container 113 under critical pressure (including hydrostatic pressure), and simultaneously, neon gas is injected as the second supercritical fluid 116 into the second coaxial cylindrical refrigerant container 114. The second coaxial cylindrical refrigerant container 114 is supplementarily cooled by an electronic refrigeration element 136, and the neon gas in the second coaxial cylindrical refrigerant container 114 is pressurized at critical pressure (2.76 MPa), achieving the internal pressure of the buoyancy bag required for buoyancy and producing liquefied hydrogen.

As shown in FIG. 8 (A,B,C), in order to produce buoyancy gas for a buoyancy bag for mining deep-sea resources in the deep sea, the device for liquefying a portion of buoyancy gas is provided with a coaxial cylindrical electrode to induce dielectric breakdown. This coaxial cylindrical electrode is cooled with liquefied petroleum gas or liquefied rare gas and an electronic refrigeration element to obtain the critical temperature of the gas, the critical pressure is applied to the buoyancy gas using the water pressure at the bottom of the sea, and the gas sandwiched between the coaxial cylindrical electrodes is compressed by the water pressure at the bottom of the sea to generate liquefied gas. After giving an electric charge to this liquefied gas, a voltage higher than the withstand voltage is further applied to the liquefied gas to cause dielectric breakdown. The liquefied gas is vaporized with the extremely short pulse heat generated by this dielectric breakdown, and resulted in volume expansion; which is used as buoyancy gas to complete the buoyancy bag. Furthermore, when the buoyancy bag starts to rise, the water pressure decreases as the water depth decreases, and the volume of the buoyancy bag increases in inverse proportion to this. The volume of the buoyancy bag is kept fixed here, and only the gas pressure is reduced. A device to liquefy a portion of the buoyancy gas that is equivalent to the amount of the reduction in pressure was fabricated on an experimental basis.

As shown in FIG. 7(b) and FIB. 8(B), a device for controlling internal pressure of a buoyancy bag was made on a trial basis; in which nitrogen gas was put into a coaxial cylindrical electrode, the coaxial cylindrical electrode was cooled with liquefied propane gas to generate buoyancy gas for the buoyancy bag, and furthermore a portion of the nitrogen gas in the buoyancy bag was cooled by the liquefied propane gas to lower the internal pressure of the buoyancy bag.

It is possible to perform synthetic chemical reactions by causing dielectric breakdown in multiple kinds of gas. In the synthetic chemical reaction equipment as in FIG. 1(B), when a gas mixture of carbon dioxide and hydrogen was compressed into a liquid dielectric thin layer 7 between metal parallel plate electrodes sealed completely, only the carbon dioxide gas was liquefied. After applying an electric charge to this liquefied carbon dioxide layer, the thickness of the liquefied carbon dioxide layer was brought closer to zero by using the withstand voltage control function 128 and the interfacial tension control function, or the withstand voltage was increased, to induce dielectric breakdown. The vaporized carbon dioxide gas and hydrogen gas were produced with the extremely short pulse thermal energy generated by the dielectric breakdown; which were made to react each other to compose hydrocarbons.

As shown in FIG. 14(A), a flawless thin liquid capsule 6 consisting of a liquid dielectric thin layer 5 is formed between a pair of electrodes 2, 3, negative pressure is applied between the liquid dielectric thin layers, the thickness of the liquid dielectric thin layers is increased to form a high withstand voltage capacitor. High voltage charging is performed to store high electrostatic energy, and when connected to a load 18, a voltage drop begins. Then, as shown in FIG. 2 (B)(c), negative pressure is applied by the external pressure pressurizing device 8 to keep the output voltage (V₁) constant. However, if the dielectric strength of some liquid dielectrics is low, it is necessary to increase the thickness of the liquid dielectric thin layer, and it is also necessary to cover the wall surface of the liquid dielectric thin layer 7 with an insulating layer in order to suppress creeping discharge. Therefore, as in FIG. 14(A), a sealed container is made with a hydrophobic porous fluororesin film, a flawless thin liquid capsule 6 filled with a liquid dielectric is inserted into it, and the liquid dielectric 5 is pressed in with a liquid pressurizing device 4 to increase the thickness of the liquid dielectric thin layer 7. And the liquid dielectric is pressurized at the oilproof pressure of the hydrophobic porous fluororesin film using the insulating oil pressure tool 127 from the outside of the hydrophobic porous fluororesin film 119, 120 to bring insulating oil 126 into contact, whereby a variable high voltage capacitance capacitor that does not cause any creeping discharge was made on a trial basis.

As shown in FIG. 14(C), ten coaxial cylindrical capacitors 162 arranged in parallel were made on an experimental basis. The prototype of withstand voltage capacitor was made with coaxial cylindrical electrodes of an aluminum pipe (inner diameter 6 mm) as the negative electrode and a copper round bar (outer diameter 1 mm) as the positive electrode. Pure water or glycerin was used as the liquid dielectric.

### APPLICABILITY IN INDUSTRY

By causing dielectric breakdown in the charged liquid dielectric layer, the volume expansion of the vaporized gas generated made it possible to create an engine that does not involve combustion and does not require refueling. By applying a charge to the liquid dielectric layer sandwiched between the materials to be welded and further applying pressure, intermolecular force surface welding was made possible. Furthermore, by increasing the thickness of the liquid dielectric layer and increasing the withstand voltage, an on-board variable high voltage capacitance capacitor for vehicles was made possible.

### EXPLANATION OF REFERENCE NUMERALS

- 1: insulating fluid
- 2: pair of solid surfaces (base material a)
- 3: pair of solid surfaces (base material b)
- 4: liquid pressurizing device
- 5: liquid dielectric (ε)
- 6: flawless thin liquid capsule
- 7: liquid dielectric thin layer
- 8: external pressure pressurizing device
- 9: insulating fluid pressurizing device
- 10: positive electrode
- 11: negative electrode
- 12: charging device
- 13: charge/discharge control function
- 14: first switch
- 15: second switch
- 16: first capacitor (C₁)
- 17: third switch
- 18: load
- 19: metal
- 20: non-metal
- 21: first dielectric capacitor
- 22: second dielectric capacitor
- 23: third dielectric capacitor
- 24: variable liquid dielectric capacitor (C_{d})
- 25: gap indicating dielectric breakdown
- 26: variable capacitance liquid dielectric capacitor
- 27: pressure tool for inducing dielectric breakdown
- 28: second capacitor (C₂)
- 29: transition control function
- 30: cylinder
- 31: piston
- 32: connecting rod (rod)
- 33: crankshaft
- 34: wheel
- 35: bypass for replenishing vaporized gas
- 36: explosion
- 37: first cylinder electrode
- 38: second cylinder electrode
- 39: first piston electrode
- 40: second piston electrode
- 41: first gas jet dielectric breakdown-inducing igniter electrode chamber
- 42: second gas jet dielectric breakdown-inducing igniter electrode chamber
- 43: liquefied gas
- 44: vaporized gas
- 45: housing
- 46: rotor
- 47: first rotor electrode
- 48: second rotor electrode
- 49: third rotor electrode
- 50: first housing electrode
- 51: second housing electrode
- 52: housing inner wall curved electrode
- 53: gas pressure buffer (for shock prevention)
- 54: spring
- 55: piston head
- 56: variable volume gas reservoir
- 57: axial compressor
- 58: pyramidal convex electrode
- 59: pyramidal concave electrode
- 60: gas outlet (vaporized gas outlet)
- 61: gas inlet (liquefied gas inlet)
- 62: turbo blade
- 63: double-acting reciprocating engine
- 64: tubular permanent magnet (S) mover
- 65: tubular permanent magnet (N) mover
- 66: iron pole
- 67: coreless copper wire coil stator
- 68: fluid jet pump
- 69: jet nozzle with first fluid control valve (injection, ejection, ejection direction switching)
- 70: jet nozzle with second fluid control valve (injection, ejection, ejection direction switching)
- 71: first piston
- 72: first fluid outlet (jet nozzle)
- 73: second fluid outlet (jet nozzle)
- 74: first fluid inlet
- 75: second fluid inlet
- 76: first fluid compression chamber
- 77: second fluid compression chamber
- 78: second piston
- 79: first fluid ejection door opening/closing valve
- 80: second fluid ejection door opening/closing valve
- 81: first fluid jet direction change valve
- 82: second fluid jet direction change valve
- 83: first fluid ejection door
- 84: second fluid ejection door
- 85: first fluid intake door
- 86: second fluid intake door
- 87: first spherical electrode
- 88: second spherical electrode
- 89: concave spherical electrode/piston
- 90: marine propulsion equipment
- 91: water kick board type propulsion device (kick plate)
- 92: submersible hull cut type propulsion device (wine glass type)
- 93: double-acting reciprocating engine using spherical electrode
- 94: first hydraulic cylinder
- 95: second hydraulic cylinder
- 96: third hydraulic cylinder
- 97: first pressure control valve
- 98: second pressure control valve
- 99: first hydraulic output rod
- 100: second hydraulic output rod
- 101: output oil
- 102: metal coaxial cylindrical electrode group
- 103: coaxial cylindrical electrode
- 104: fourth switch
- 105: third capacitor (C₃)
- 106: fourth capacitor (C₄)
- 107: sealed container for blasting device
- 108: sealing lid
- 109: rocket nozzle
- 110: buoyancy bag
- 111: buoyancy bag volume adjustment device
- 112: open surface of coaxial cylindrical electrode
- 113: first coaxial cylindrical refrigerant container
- 114: second coaxial cylindrical refrigerant container
- 115: first supercritical fluid
- 116: second supercritical fluid
- 117: gas cylinder
- 118: outer wall
- 119: interfacial tension conversion isolation membrane
- 120: hydrophobic porous fluororesin film
- 121: first hydrophobic porous fluororesin film
- 122: second hydrophobic porous fluororesin film
- 123: partition film/outer wall of sealed container
- 124: partition film/insulating fluid inlet
- 125: insulating fluid layer
- 126: insulating oil
- 127: insulating oil pressure tool
- 128: withstand voltage control function (liquid pressurizing device, external pressure pressurizing device)
- 129: water pressure (deep sea)
- 130: liquid gas (air, nitrogen, hydrogen, helium)
- 131: dielectric breakdown inducting circuit
- 132: electronic refrigeration element temperature control circuit
- 133: gas recovery function
- 134: electrode for inducing dielectric breakdown
- 135: refrigerant (liquefied gas)
- 136: electronic refrigeration element
- 137: thin tube
- 138: liquefied gas storage container
- 139: cock
- 140: central axis electrode
- 141: coaxial cylindrical outer electrode
- 142: resource recovery basket
- 143: resource loading basket
- 144: sunken ship
- 145: gas jet dielectric breakdown-inducing igniter (dielectric breakdown-inducing electrode chamber)
- 146: opening and closing valve
- 147: compressor
- 148: double-acting reciprocating engine
- 149: first fluid intake valve
- 150: second fluid intake valve
- 151: magnetic piston
- 152: seabed disposal/unused minerals (and ballast)
- 153: first buoyancy gas injection function valve
- 154: second buoyancy gas injection function valve
- 155: first buoyancy gas ejection function nozzle
- 156: second buoyancy gas ejection function nozzle
- 161: copper magnetic induction water boiler
- 162: coaxial cylindrical capacitor
- 163: triangular rotary engine
- 164: cam-type rotary engine
- 165: vane-type rotary engine
- 166: vane
- 167: conical concave surface
- 168: conical convex surface
- 169: circular rotor
- 170: conductive metal surface for inducing dielectric breakdown
- 171: vaporized gas jet nozzle
- 172: coaxial cylindrical electrode with an inlet and a jet nozzle being separate

## Claims

1. An energy conversion device using phase transition of gases, wherein
a capacitor comprises a sealed electrode chamber, wherein a fluid dielectric composed of a liquid dielectric containing a liquefied gas or pure water and/or a gaseous dielectric made of said liquid dielectric, vaporized, is sandwiched in the gap between a pair of positive and negative electrodes made up of metal and/or solid dielectrics, having flat or curved surfaces, and said fluid dielectric is surrounded by an insulating partition wall including a wall of atmospheric air due to meniscus force;
the capacitor is a variable capacitance capacitor, wherein a pressure-giving/pressure-receiving device for controlling said fluid dielectric in said sealed electrode chamber, equipped with at least one of the following functions, is installed:
liquid thickness adjustment function, function for opening/closing the insulating partition wall, pressurizing function, pressure-exerting/drive-transmission function, dielectric breakdown-inducing function, function for critical temperature control, coolant cooling function, thermoelectric element cooling function, function for supporting a moving wall, and charging control function; and,
with said liquid thickness adjustment function, dielectric breakdown is induced by shortening the thickness of said liquid dielectric and/or by applying a strong electric field to said liquid dielectric, or a high dielectric strength capacitor is created by lengthening the thickness of said liquid dielectric;
in case of inducing said dielectric breakdown, after said variable capacitance capacitor is charged with said charging control function, breakdown is caused in said liquid dielectric by shortening the distance between said positive and negative electrodes and/or by applying a voltage higher than its dielectric strength to the gap between said positive and negative electrodes, whereby pulse heat is generated; and
said energy conversion device is one of the following devices:
a welding device, wherewith a pair of metal and/or solid dielectrics, sandwiching said liquid dielectric, is joined together with said pulse heat:
a gas jet dielectric breakdown-inducing igniter, comprising said sealed chamber, wherein said gaseous dielectric is produced by vaporizing and expanding said liquid dielectric with said pulse heat:
a device for instantaneously jetting expanded gas, wherein after said gas jet dielectric breakdown-inducing igniter with an enclosed gas that liquefies under pressure at room temperature, being made of heteronuclear diatomic molecules with a critical temperature of 273K or higher of said liquid dielectric, is sealed with the function for opening/closing the insulating partition wall, a voltage higher than its dielectric strength is applied to induce breakdown in said liquid dielectric, and a jet gas produced by dielectric breakdown is converted into thrust or explosive power:
an engine device, comprising a reciprocating engine, a rotary engine with a circular rotor, or a rotary engine with a triangular rotor, which repeats the operation of converting said expanded gas of said gas that liquefies under pressure at room temperature, jetted from said gas jet dielectric breakdown-inducing igniter, into a drive power with said pressure-exerting/drive-transmission function, and the operation of reliquefying said gaseous dielectric with said pressurizing function, using a part of said drive power:
a buoyancy device for mining seabed resources, equipped with function for adjusting balance between the internal pressure of said buoyancy bag and the hydrostatic pressures, wherein said liquid dielectric injected into said gas jet dielectric breakdown-inducing igniter is said gas that liquefies under pressure at room temperature or a gas that liquefies under pressure at low temperature, being made of homonuclear diatomic molecules with a critical temperature of 273K or lower, its volume expansion accompanying the vaporization of said liquid dielectric, made of said gas that liquefies under pressure at room temperature or said gas that liquefies under pressure at low temperature, is repeated a plurality of times, said gaseous dielectric is injected into the buoyancy bag, and thus, the balance between the internal pressure of said buoyancy bag and the hydrostatic pressures is adjusted during descending to and ascending from the seabed:
when said liquid dielectric is pure water,
a steam engine device that is suited to a device for instantaneously jetting expanded gas or an engine device, which repeats the operation of causing dielectric breakdown in said pure water and converting the steam, vaporized and expanded by said pulse heat, into drive power with said pressure-exerting/drive-transmission function, and the operation of reliquefying said vaporized and expanded steam with said pressurizing function, using a part of said drive power; in case of making said high dielectric strength capacitor,
a variable high voltage power supply with high dielectric strength, wherein, after increasing the thickness of said liquid dielectric with said pressure-giving/pressure-receiving device, said variable capacitance capacitor is charged with a high voltage.

2. The pressure-giving/pressure-receiving device according to Claim 1, which is equipped with at least one of the following functions:
said liquid thickness adjustment function for controlling the layer thickness of said liquid dielectric:
said dielectric breakdown-inducing function, to induce dielectric breakdown by reducing the layer thickness of said liquid dielectric close to zero:
said function for opening/closing the insulating partition wall, to release said gaseous dielectric, being said liquid dielectric vaporized, out of the system through said insulating partition wall:
said pressurizing function for liquefying said gaseous dielectric:
said coolant cooling function for liquefying said gaseous dielectric:
said function for critical temperature control, to suppress the reliquefaction of said gaseous dielectric produced by said dielectric breakdown, due to the autogenous pressure of said gaseous dielectric:
said charging control function, wherewith said capacitor is charged until just before dielectric breakdown, and moreover, a high electric field is applied for causing dielectric breakdown, and the charger power supply is cut off at the time of dielectric breakdown:
said thermoelectric element cooling function, to be used as an auxiliary means for decreasing the boiling point of said gas that liquefies under pressure at low temperature, which was liquefied under pressure in the atmosphere of said gas that liquefies under pressure at room temperature:
said pressure-exerting/drive-transmission function for converting the vaporized gas, expanded during the evaporation of said liquid dielectric, into energy: and, said function for supporting a moving wall, to pressurize the pressure-contacting surfaces between the piston head and the cylinder face of a reciprocating engine or between the rotor and the housing of a rotary engine, which share said pressurizing function and said pressure-exerting/drive-transmission function.

3. The energy conversion device using phase transition of gases according to Claim 1, which is equipped with said positive and negative electrodes, made of metal and/or non-metal, having one of the following shapes:
parallel plate electrodes: a coaxial cylindrical electrode: a coaxial circular surface electrode, comprising a coaxial multistage cylinder wherein a coaxial cone or a cone of said coaxial cone is replaced with a multistage cylinder: or coaxial concave/convex conical electrodes, having a concave and a convex surface of a concentric spherical electrode or a conical electrode as a pair.

4. The gas jet dielectric breakdown-inducing igniter according to Claims 1 and 3, which induces dielectric breakdown, wherein
said gas jet dielectric breakdown-inducing igniter has the electrodes that are made of metal, and is so constructed that said insulating partition wall is covered with a solid material, and the inlet for said liquid dielectric and the jet nozzle for a vaporized gas are one and the same or said inlet for said liquid dielectric and said jet nozzle for said vaporized gas are separate, and the electrode construction is such that the amount of said liquid dielectric enough to create a desired pressure in state of an expanded gas is filled in said gas jet dielectric breakdown-inducing igniter, and dielectric breakdown is caused instantaneously;
in case that the inlet for said liquid dielectric and the jet nozzle for the vaporized gas are one and the same,
said igniter is one of the following gas jet dielectric breakdown-inducing igniters:
a gas jet dielectric breakdown-inducing igniter that causes partial discharge by bringing the conductive metal surface of said piston head or rotor to the positive and negative electrodes placed at said jet nozzle of said gas jet dielectric breakdown-inducing igniter:
a gas jet dielectric breakdown-inducing igniter that creates a strong electric field, having electrodes so constructed that the distance between the electrodes is decreased in a part of said electrodes of said gas jet dielectric breakdown-inducing igniter; and
the igniter is equipped with one of the following electrodes:
said parallel plate electrodes, to which a cylinder face or a piston head comes close at said jet nozzle for said vaporized gas of said expanded gas, and just before said cylinder face or said piston head comes into contact with them, dielectric breakdown is caused:
said coaxial cylindrical electrode, composed of a cylindrical electrode equipped with said jet nozzle for said expanded gas and a cylindrical rod as the center axis: said coaxial conical electrode, composed of a conical electrode with said jet nozzle for said expanded gas being wide and a cylindrical rod as the center axis: said coaxial concave/convex conical electrode, composed of conical electrodes with said jet nozzle for said expanded gas being wide and a conical convex surface as the center axis:
said coaxial multistage cylindrical electrode, composed of a multistage cylinder with said jet nozzle for said expanded gas being wide and a cylindrical rod as the center axis; and,
in case that said jet nozzle for the vaporized gas and the inlet for said liquid dielectric are separate, the igniter is equipped with one of the following electrodes:
a coaxial cylindrical electrode with an inlet and a jet nozzle being separate, wherein, after said liquefied gas is directly injected through the inlet for said liquid dielectric and sealed by the cock, and said jet nozzle is covered with a pressurizing valve having a reaction force lower than the critical pressure of said liquefied gas, said liquid dielectric is charged, and moreover, breakdown is caused in said liquid dielectric by applying a voltage higher than the dielectric strength of said liquid dielectric: or
said coaxial cylindrical electrode with an inlet and a jet nozzle being separate, wherein, said coaxial cylindrical electrode having the inlet for said liquid dielectric is provided on the side of the housing, where the space, enclosed by the contact surface of said rotor with housing and a vane of said rotary engine with a circular rotor, comes close to zero, and in order to cause dielectric breakdown in the area, where the space, enclosed by the contact surface of said rotor with said housing and said vane, begins to increase, said jet nozzle, so constructed that it is covered by said pressurizing valve having a reaction force lower than the critical pressure of said liquefied gas, is provided on the side of said housing, and moreover, after said liquid dielectric is charged, a partial discharge is made to occur by bringing the conductive metal surfaces of said rotor and said vane close to the positive and negative electrodes placed at the inlet for said liquid dielectric.

5. The welding device according to Claims 1 and 3, wherein
said positive and negative electrodes comprises said parallel flat plates or said coaxial concave/convex conical electrodes and are surfaces to be welded;
said liquid dielectric is filled in the gap between a pair of said surfaces to be welded, composed of non-metals such as ceramics and plastics and/or metals;
a sealed electrode chamber, made up of a wall of atmospheric air due to said meniscus force, is provided;
with said variable capacitance capacitor charged, the gap between said positive and negative electrodes is shortened with said pressure-giving/pressure-receiving device until just before a short circuit, whereby dielectric breakdown is caused; and,
pressurization is continued until the completion of welding, even after the dielectric breakdown.

6. The welding device according to Claim 5, wherein
the liquid dielectric used in said welding device is pure water, oil, or alcohol.

7. The welding device according to Claim 5, wherein
when using said welding device, at least a pair of materials to be welded, made of metals and/or non-metals such as ceramics, high molecular materials, wood, paper, rubber, and paint, are placed between a positive and negative collector electrodes;
said liquid dielectric is sandwiched between said pair of materials to be welded, which is regarded as a composite dielectric capacitor, and breakdown is caused in said liquid dielectric, whereby said pair of materials to be welded are welded together;
therefore, the device welds the following together:
a pair of materials to be welded are solid materials, which are not restricted to metals or non-metals: and
layered materials, wherein pairs of said solid materials sandwiching said liquid dielectric are connected in series.

8. The device for instantaneously jetting expanded gas according to Claims 1 and 4, wherein
said device for instantaneously jetting expanded gas is equipped with at least one said gas jet dielectric breakdown-inducing igniter, said gas that liquefies under pressure at room temperature is enclosed in said sealed electrode chamber, and the inlet for said liquefied gas is sealed; and
the following devices have said liquid dielectric as one of their components:
a rocket engine, wherein said gas jet nozzle is covered with the pressurizing valve having a reaction pressure lower than the critical pressure of said liquefied gas, said pressurizing valve is opened by the exhaust gas pressure of said vaporized gas, higher than the critical pressure of said liquefied gas, and a nozzle is provided in the rear portion of said pressurizing valve:
a blasting device, wherein said jet nozzle for jetting gas is completely sealed;
after said liquid dielectric is charged, breakdown is caused in said liquid dielectric by applying a voltage higher than the dielectric strength of said liquid dielectric, and thus, the exhaust gas pressure of said vaporized gas having an expanded volume is converted into energy.

9. The device for instantaneously jetting expanded gas according to Claim 8,
wherein said liquid dielectric is either pure water or said gas that liquefies under pressure at room temperature.

10. The engine device according to Claims 1, 3 and 4, wherein
said engine device is either a reciprocating engine device or a rotary engine device, equipped with said gas jet dielectric breakdown-inducing igniter and said pressure-exerting/drive-transmission function for converting the vaporized gas, expanded during evaporation, into drive power;
the engine device comprises one of the following engines:
a reciprocating engine, wherein one of said parallel plate electrodes is the face of the cylinder, a fixed component, and the other is the piston head, and moreover, said piston head comes close to the face of said cylinder to induce dielectric breakdown:
a reciprocating engine, wherein at least one electrode, i.e. said coaxial cylindrical electrode, said coaxial conical electrode or said coaxial multistage cylindrical electrode, is placed either on the face of the cylinder, a fixed component, or on the surface of the piston, a moving component, and said piston head comes close to the face of said gas jet dielectric breakdown-inducing igniter to induce dielectric breakdown:
said rotary engine with a circular rotor, wherein at least one said coaxial cylindrical electrode is placed on the surface of said housing, a fixed component, and the surface of said rotor, a moving component, comes close to the face of said housing, a fixed component, to induce dielectric breakdown:
said rotary engine with a circular rotor, wherein at least one said coaxial cylindrical electrode is placed on the surface of said rotor, a moving component, and the surface of said rotor, a moving component, comes close to the surface of the housing, a fixed component, to induce dielectric breakdown:
said rotary engine with a triangular rotor, wherein at least one said coaxial cylindrical electrode is placed vertically on the surface of said housing, a fixed component, and moreover, the face of said rotor, a moving component, comes close to the surface of said housing, a fixed component, to induce dielectric breakdown:
said rotary engine with a triangular rotor, wherein at least one said coaxial cylindrical electrode is placed vertically on the face of said rotor, a moving component, and moreover, the surface of the cocoon-shaped housing, a fixed component, and the surface of said rotor, a moving component, come close together to induce dielectric breakdown.

11. A double-acting reciprocating engine comprising said reciprocating engine device according to Claim 10, wherein
said reciprocating engine is equipped with the first and the second gas jet dielectric breakdown-inducing igniter electrode chambers, having respectively at least one said gas jet dielectric breakdown-inducing igniter on both cylinder faces, which sandwich the first and the second piston faces; and
said liquefied gas is expanded during evaporation in the first gas jet dielectric breakdown-inducing igniter electrode chamber, and compresses the first piston face, and transmits the driving force out of the system with the interlocked connection rod; and simultaneously, by compressing said second piston face, said gas is liquefied in said second gas jet dielectric breakdown-inducing igniter electrode chamber, while these operations are done in conjunction with each other.

12. The rotary engine with a circular rotor according to Claims 4 and 10, wherein
said rotary engine with a circular rotor has the rotor face and the stator housing face, both being circular, is composed of a cam-type rotary engine equipped with at least one vane on the side of the stator housing and a vane-type rotary engine equipped with two vanes on the side of the rotor, and moreover, is equipped with a gas jet dielectric breakdown-inducing igniter on the side of said stator housing face, a gas jet dielectric breakdown-inducing igniter having said coaxial cylindrical electrode whose inlet and jet nozzle are separate, and in case that said gas jet dielectric breakdown-inducing igniter is placed on the side of said rotor face, said coaxial cylindrical electrode whose inlet for said liquid dielectric and jet nozzle for said vaporized gas are one and the same.

13. The engine device according to Claim 10, wherein,
said gas that liquefies under pressure at room temperature is butane, propane, ammonia, carbon dioxide or pure water.

14. The engine device according to Claim 10, wherein,
when using said double-acting reciprocating engine or said rotary engine, the engine device drives the device comprising the following:
a generator, wherein said pressure-exerting/drive-transmission function device is provided with a magnet:
a dielectric heating device using dielectric heating, wherein said pressure-exerting/drive-transmission function device is provided with a magnet:
a heating/cooling device, wherein said pressure-exerting/drive-transmission function device interlocks with a pump for adiabatically expanding or adiabatically compressing gas for heating/cooling:
an air jet, wherein said pressure-exerting/drive-transmission function device interlocks with a pump for adiabatically expanding or adiabatically compressing atmospheric air:
a water jet, wherein said pressure-exerting/drive-transmission function device interlocks with an expansion or compression pump of water:
a linear generator, wherein said piston head in the cylinder of said double-acting reciprocating engine is replaced with a magnet, and a coil is provided on the outer wall of said cylinder: and
a linear generator, wherein said pressure-exerting/drive-transmission function device of said double-acting reciprocating engine is provided with a magnet.

15. The buoyancy device for mining seabed resources according to Claims 1 and 2, equipped with said function for adjusting balance between the internal pressure of said buoyancy bag and the hydrostatic pressure, wherein,
after a liquefied gas made of said heteronuclear diatomic molecules or said homonuclear diatomic molecules is injected into said gas jet dielectric breakdown-inducing igniter as a dielectric breakdown-inducing electrode, dielectric breakdown is very frequently repeated, and thus, a large amount of vaporized gas made of said heteronuclear diatomic molecules or said homonuclear diatomic molecules having pressure higher than the hydrostatic pressure is instantaneously filled in said buoyancy bag, and moreover, in order to suppress the volume expansion of the buoyancy bag during ascending, said vaporized gas, after having been filled in, is liquefied while maintaining balance between the internal pressure of said buoyancy bag and the hydrostatic pressure; when using said device, a vaporized gas, made of at least one of the following liquefied gases, expanded during evaporation, is injected in said buoyancy bag, and the balance between the internal pressure of said buoyancy bag and the hydrostatic pressure is adjusted during descending to and ascending from the seabed:
carbon dioxide made of heteronuclear diatomic molecules, which is said gas that liquefies under pressure at room temperature:
a gas that liquefies under pressure at low temperature, made of homonuclear diatomic molecules with the exception of halogen, having a critical temperature of 237K or lower, or a gas that liquefies under pressure at room temperature:
in case that the boiling point of said homonuclear diatomic molecules is higher than that of said neon,
liquefied homonuclear diatomic molecules produced by cooling said homonuclear diatomic molecules, which was compressed using said pressurizing function, with said gas that liquefies under pressure at room temperature:
in case that the boiling point of said homonuclear diatomic molecules is lower than that of said neon,
liquefied hydrogen produced by compressing the hydrogen, cooled with the liquefied neon, which was produced by compressing a gas mixture containing said gas that liquefies under pressure at room temperature and homonuclear diatomic molecules using said pressurizing function and moreover, by cooling the liquefied homonuclear diatomic molecules with said thermoelectric element cooling function:
in case that the boiling point of a rare gas is lower than that of said neon,
liquefied helium produced by compressing the helium, cooled with the liquefied neon, which was produced by compressing a gas mixture containing said gas that liquefies under pressure at room temperature and homonuclear diatomic molecules using said pressurizing function and by additionally cooling the liquefied homonuclear diatomic molecules with said thermoelectric element cooling function.

16. The buoyancy device for mining seabed resources according to Claim 15, which is equipped with function for collecting said heteronuclear diatomic molecules or said homonuclear diatomic molecules, wherein
the decrease of the internal pressure of said buoyancy bag is controlled by liquefying a part of said heteronuclear diatomic molecules or said homonuclear diatomic molecules with at least one kind of supercritical fluid in order to decrease only the internal pressure, while keeping the volume of said buoyancy bag fixed, since buoyance increases by 0.1 times per meter as said buoyancy bag ascends from the deep sea, and the volume of said buoyancy bag also increases by 0.1 times per meter.

17. The buoyancy device for mining seabed resources according to Claim 15,
wherein,
when producing a large volume of buoyancy gas in a short time under high pressure in the deep sea by using said double-acting reciprocating engine, the buoyancy device is provided with the following:
the first and the second gas compressing/expanding chambers with the piston inbetween, within the cylinder:
both faces of said piston that are the faces of the first and the second piston,
and at the same time, conductive metal surfaces for inducing dielectric breakdown:
the first and the second valves having buoyancy gas injection function:
the first and the second nozzles having buoyancy gas jetting function:
the first and the second coaxial cylindrical metal electrode groups, composed of at least one said gas jet dielectric breakdown-inducing igniter: and
the first and the second coaxial cylindrical containers for coolant, wherewith the first and the second buoyancy gases in said first and second coaxial cylindrical metal electrode groups are cooled; and,
high pressure buoyancy gas is produced by inducing dielectric breakdown in said first or second coaxial cylindrical metal electrode group, and in the other, the buoyancy gas injected through said buoyancy gas injection valve is liquefied by compression, and said buoyancy gas is pressed into said buoyancy bag via said buoyancy gas jet valve; and
these operations are repeated in said first and second coaxial cylindrical metal electrode groups and in said first and second gas compressing/expanding chambers by turns, thus producing high pressure buoyancy gas in a short time.

18. The variable high voltage power supply with high dielectric strength according to Claim 1, wherein
said positive and negative electrodes in said sealed electrode chambers are metal electrodes composed of said parallel plates or a coaxial cone, and said liquid dielectric is filled between said positive and said negative electrodes, and moreover, said variable capacitance capacitor with the distance between the electrodes widened is charged with a high voltage.

19. The variable high voltage power supply with high dielectric strength according to Claim 18, wherein said liquid dielectric is pure water, alcohol groups or aromatic compounds.

20. The variable high voltage power supply with high dielectric strength, comprising the variable capacitance capacitor according to Claims 18, wherein,
when using said variable high voltage power supply with high dielectric strength in order to increase the thickness of said liquid dielectric until a desired withstand voltage is reached,
in case that said liquid dielectric is viscous, said meniscus force is used:
in case that said liquid dielectric is pure water,
an elastic side wall is provided in the boundary between an insulating fluid and the thin layer of said liquid dielectric, and in order to prevent said insulating fluid from getting in and to form a sealed container that encloses the thin layer of said liquid dielectric, a film of hydrophobic porous fluororesin with water repellency and oil repellency is provided as a partition film and also as said side wall of the sealed container, and said side wall, i.e. the first hydrophobic porous fluororesin film, is converted into a thin layer of the insulating fluid in order to prevent creeping discharge, and moreover, an oil film is formed on the side of the liquid dielectric thin layer by applying a withstand oil pressure higher than the liquid pressure to said thin layer of the liquid dielectric.

21. The variable high voltage power supply with high dielectric strength comprising the variable capacitance capacitor according to Claim 17, wherein
said variable capacitance capacitor is charged with a voltage lower than the withstand voltage of the liquid dielectric, and the voltage decrease due to continued discharge is corrected through increase in output voltage, by decreasing capacitance through increase in the thickness of said liquid dielectric thin layer with a decreased pressure created by an external-pressure pressurizing device.
